# EUROPEAN PATENT SPECIFICATION

(11) **EP 0 836 106 B1**
(45) Date of publication and mention of the grant of the patent: **11.02.2004**
(21) Application number: 97117468.5
(22) Date of filing: 09.10.1997
(51) Int. Cl.: G02B 27/00, G02B 26/10

(54) **Light-beam scanning apparatus comprising divergent or convergent light-shaping means**
Vorrichtung zur Lichtstrahlabtastung mit divergenten oder konvergenten Strahlformungsmitteln
Dispositif de balayage optique comprenant des moyens divergents ou convergents pour mettre en forme un faisceau lumineux

(30) Priority: 11.10.1996 JP 26978396; 29.01.1997 JP 1543097
(43) Date of publication of application: 15.04.1998
(73) Proprietor: DAINIPPON SCREEN MFG. CO., LTD., Kamikyo-ku Kyoto-shi Kyoto-fu (JP)
(72) Inventor: Kawabata, Motonobu, Dainippon Screen Mfg. Co., Ltd, Minami-ku, Kyoto (JP); Kataoka, Yoshikazu, Dainippon Screen Mfg. Co., Ltd, Minami-ku, Kyoto (JP); Oka, Junichi, Dainippon Screen Mfg. Co., Ltd, Minami-ku, Kyoto (JP); Shirota, Hiroyuki, Dainippon Screen Mfg. Co., Ltd, Horikawa-dori, Kamikyo, Kyoto (JP)
(74) Representative: Goddar, Heinz J., Dr.

(56) References cited:
- EP-A- 0 566 132
- EP-A- 0 585 867
- EP-A- 0 629 891
- US-A- 4 756 585
- US-A- 5 087 983

## Description

### BACKGROUND OF THE INVENTION

### Field of the Invention

The present invention relates to an apparatus for scanning a light beam, such as a laser beam printer and a process output scanner, which creates a two-dimensional image.

### Description of the Background Art

Aiming at scanning at a constant speed on a surface-to-be-scanned, many of conventional scanning apparatuses use a rotational polygon mirror with a plurality of reflection surfaces as a deflector and dispose a scanning lens with an fθ-characteristic in a main scanning direction. In such a scanning apparatus, in general, a luminous flux which is parallel within a main scanning surface is incident upon the scanning lens.

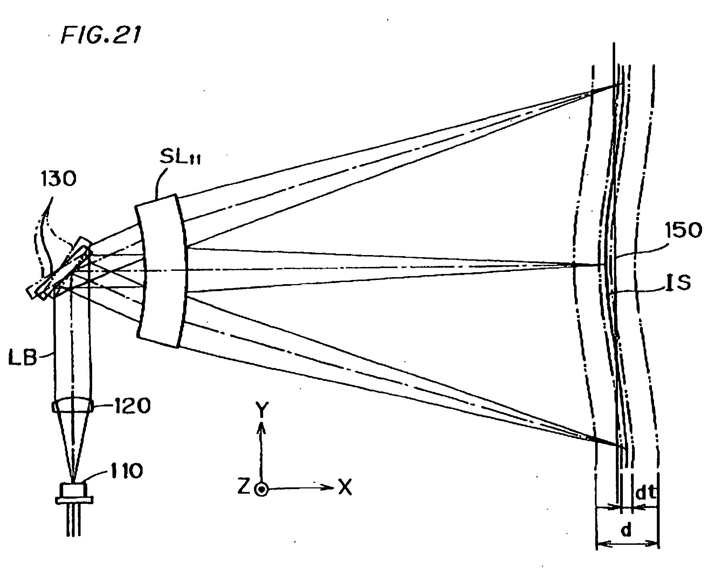

Fig. 21 is a plan view showing a conventional apparatus for light beam scanning. In Fig. 21, a three-dimensional coordinate system X-Y-Z is defined with an X-Y plane as a horizontal plane and a Z-axis direction as a vertical direction.

A light beam LB from a semiconductor laser 110 impinges upon a collimate lens 120, shaped into a flux which is parallel within the main scanning surface (X-Y plane), and thereafter emitted toward a deflector 130. Through a scanning lens SL₁₁ which is disposed between the deflector and a surface-to-be-scanned 150, the flux is focused into an image on the surface-to-be-scanned 150.

Meanwhile, in general, processing of a lens surface into a spherical surface sometimes results in a processing error called a regularity deviation. A regularity deviation is a local deviation of a lens surface from an ideal curvature, and identified as deformed interference fringes by a test plate glass or an interferometer. Since a lens surface is processed as it is rotated about a central axis of a lens, a regularity deviation appears symmetrical to the central axis in general. This is caused as a processing tool called "optical tool" for chipping off a lens surface sometimes contacts a lens surface locally and strongly.

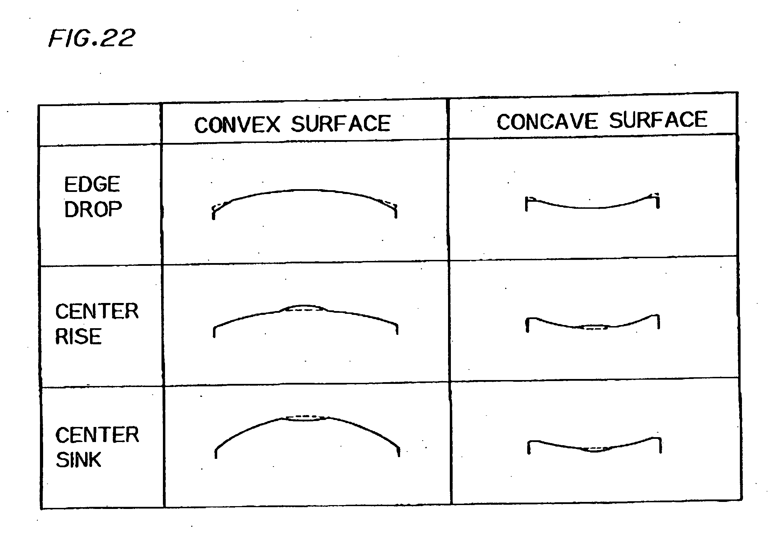

There are a few types of regularity deviations of a lens surface which are created in this manner, as shown in Fig. 22. Where an optical tool is in a stronger contact with a peripheral portion of a lens surface than with a central portion of the lens surface, the lens surface is processed into such a shape with the central portion somewhat unprocessed. Such a regularity deviation is called "edge drop" or "center rise." Conversely, where the optical tool is in a stronger contact with the central portion of the lens surface than with a peripheral portion of the lens surface, the central and surrounding portions of the lens surface a little cave in, thereby creating a regularity deviation called "center sink."

Of these regularity deviations, if "edge drop" or "center rise" are created in a lens surface, a convex lens surface has a large apparent curvature at the central portion (i.e., the absolute value of a radius of curvature is small), whereas a concave lens surface has a small apparent curvature at the central portion (i.e., the absolute value of a radius of curvature is large). Conversely, if "center sink" is created in a lens surface, a convex lens surface has a small apparent curvature at the central portion (i.e., the absolute value of a radius of curvature is large), whereas a concave lens surface has a large apparent curvature at the central portion (i.e., the absolute value of a radius of curvature is small).

Since a scanning lens inherently scans while partially using an effective portion of the lens, if a scanning lens which has a regularity deviation such as "edge drop" or "center rise" is used, a focal length becomes shorter in the vicinity of a center of a field angle than in a peripheral portion, so that an image surface as a whole warps in a convex shape toward the negative side of an X-axis. In the following, such a curvature of field will be referred to as "a curvature of field with the image surface warping toward the over side." On the other hand, a scanning lens with "center sink" causes the image surface to warp in a concave shape toward the positive side of an X-axis. Such a curvature will be hereinafter referred to as "a curvature of field with the image surface warping toward the under side." It is to be noted, however, that what will be described in the following is a curvature of field in the main scanning direction.

To eliminate "edge drop," "center rise" and "center sink" of a lens surface which cause a curvature of field, a processing accuracy on the order of a wavelength or smaller is necessary all over the lens surface, which leads to an increased cost.

Further, a spot size which is demanded by a conventional apparatus for light beam scanning is relatively large, and therefore, the conventional apparatus has a relatively deep depth of focus such as a depth of focus d shown in Fig. 21. Hence, even if a curvature of field due to such a cause above is relatively large, it is possible to locate the surface-to-be-scanned 150 within the depth of focus across the entire scanning width and ensure excellent drawing.

An optical scanner as disclosed in EP 0 585 867 includes according to figure 3 thereof a semiconductor laser 21 and an anamorphic single lens 22 having the function of two lenses, i.e. a collimate lens and a prism, a polygon 25 and a compensating lens 26.

An optical scanning apparatus as disclosed in EP 0 566 132 includes according to figures 4 and 5 thereof a light source 1, a condensing lens 2, a cylindrical lens 4, a polygon mirror 5 and an fθ lens. The object of this optical scanning apparatus is to correct deterioration of aberrations due to backward and forward movement of a mirror surface caused by the rotation of the polygon mirror.

An optical beam scanning system as disclosed in US 4,756,585 includes according to figures 3 and 4 thereof a light source LG, a scanning lens 30, a cylindrical lens 31, a polygon S1 and a lens 5 for compensating for a parallelism error. The scanning lens 30 is disposed between a polygon S1 and a light source LG.

None of the disclosures address a problem with regard to correcting a curvature of field without increasing the processing accuracy of a lens surface and no means other than an optical system for correcting a curvature of field caused by a lens surface having a surface shape error are disclosed.

However, in recent years, as a demand for highly accurate drawing has increased, it has become necessary to have a small spot size on the surface-to-be-scanned 150. To this end, an F-number of a scanning lens must be reduced, which will shorten the depth of focus as a depth of focus dt shown in Fig. 21. If a curvature of field due to the cause above is large, it is difficult to locate the surface-to-be-scanned 150 within the depth of focus dt across the entire scanning width, and therefore, the quality of drawing is locally deteriorated.

### SUMMARY OF THE INVENTION

The present invention is directed to an apparatus of claim 1 for scanning a light beam and a method of claim 9 of scanning a light beam.

Preferably, wherein the non-parallel light shaping means may shape the luminous flux into divergent light which diverges within the first scanning direction.

This enables to correct a curvature of field without increasing a processing accuracy of a lens surface having "a center rise" of a lens, and hence, to obtain an excellent drawing quality.

Alternatively, the non-parallel light shaping means may shape the luminous flux into convergent light which converges within the first scanning direction.

This enables to correct a curvature of field without increasing a processing accuracy of a lens surface having "a center sink" of a lens, and hence, to obtain an excellent drawing quality.

In an aspect of the present invention, the apparatus further comprises according to claim 7; e) an imaging optical system for converging, in a cooperative function with the non-parallel light shaping means, the luminous flux only in a second scanning direction, thereby forming a linear image in a vicinity of the reflection surfaces of the polygon mirror; and f) facet error correcting means for compensating, in a cooperative function with the scanning lens, a facet error of the reflection surfaces of the polygon mirror, thereby ensuring that the reflection surfaces of the polygon mirror and the medium surface to be scanned are in an approximate optical conjugation with each other. Respectively the method is improved according to claim 15.

This suppresses an influence of a facet error of the polygon mirror, and therefore, a further better drawing quality is attained.

Accordingly, an object of the present invention is to provide an apparatus for and a method of scanning a light beam which correct a curvature of field without increasing a processing accuracy of a lens surface and hence obtains an excellent drawing quality.

These and other objects, features, aspects and advantages of the present invention will become more apparent from the following detailed description of the present invention when taken in. conjunction with the accompanying drawings.

### BRIEF DESCRIPTION OF THE DRAWINGS

Fig. 1 is a view showing a structure of an apparatus for light beam scanning according to a first preferred embodiment of the present invention;
Figs. 2A and 2B are views showing a condition in which a curvature of field is corrected in the apparatus for light beam scanning according to the first preferred embodiment;
Figs. 3A and 3B are views showing a displacement in a focal position between a case where a scanning lens of a first preferred example has a center rise and a case where the scanning lens does not have a center rise;
Fig. 4 is a view showing a structure of an apparatus for light beam scanning according to a second preferred embodiment of the present invention;
Figs. 5A and 5B are views showing a condition in which a curvature of field is corrected in the apparatus for light beam scanning according to the second preferred embodiment;
Figs. 6A and 6B are views showing a displacement in a focal position between a case where a scanning lens of a second preferred example has a center rise and a case where the scanning lens does not have a center rise;
Fig. 7 is a view showing a structure of an apparatus for light beam scanning according to a third preferred embodiment of the present invention;
Figs. 8A and 8B arc views showing a condition in which a curvature of field is corrected in the apparatus for light beam scanning according to the third preferred embodiment;
Figs. 9A and 9B are views showing a displacement in a focal position between a case where a scanning lens of a third preferred example has a center rise and a case where the scanning lens does not have a center rise;
Figs. 10A to 10C are views showing a structure of an apparatus for light beam scanning according to a fourth preferred embodiment of the present invention;
Fig. 11 is a view showing a structure of an apparatus for light beam scanning according to a fifth preferred embodiment of the present invention;
Figs. 12A and 12B are views showing a condition in which a curvature of field is corrected in the apparatus for light beam scanning according to the fifth preferred embodiment;
Figs. 13A and 13B are views showing a displacement in a focal position between a case where a scanning lens of a fourth preferred example has a center sink and a case where the scanning lens does not have a center sink;
Fig. 14 is a view showing a structure of an apparatus for light beam scanning according to a sixth preferred embodiment of the present invention.
Figs. 15A and 15B are views showing a condition in which a curvature of field is corrected in the apparatus for light beam scanning according to the sixth preferred embodiment;
Figs. 16A and 16B are views showing a displacement in a focal position between a case where a scanning lens of a fifth preferred example has a center sink and a case where the scanning lens does not have a center sink;
Fig. 17 is a view showing a structure of an apparatus for light beam scanning according to a seventh preferred embodiment of the present invention;
Figs. 18A and 18B are views showing a condition in which a curvature of field is corrected in the apparatus for light beam scanning according to the seventh preferred embodiment;
Figs. 19A and 19B are views showing a displacement in a focal position between a case where a scanning lens of a sixth preferred example has a center sink and a case where the scanning lens does not have a center sink;
Figs. 20A to 20C are views showing a structure of an apparatus for light beam scanning according to an eighth preferred embodiment of the present invention;
Fig. 21 is a plan view showing a conventional apparatus for light beam scanning; and
Fig. 22 is a cross sectional view of lenses which have various types of regularity deviations.

### DESCRIPTION OF THE PREFERRED EMBODIMENTS

### 1. First Preferred Embodiment

### <1-1. Structure And Characteristics Of First Preferred Embodiment>

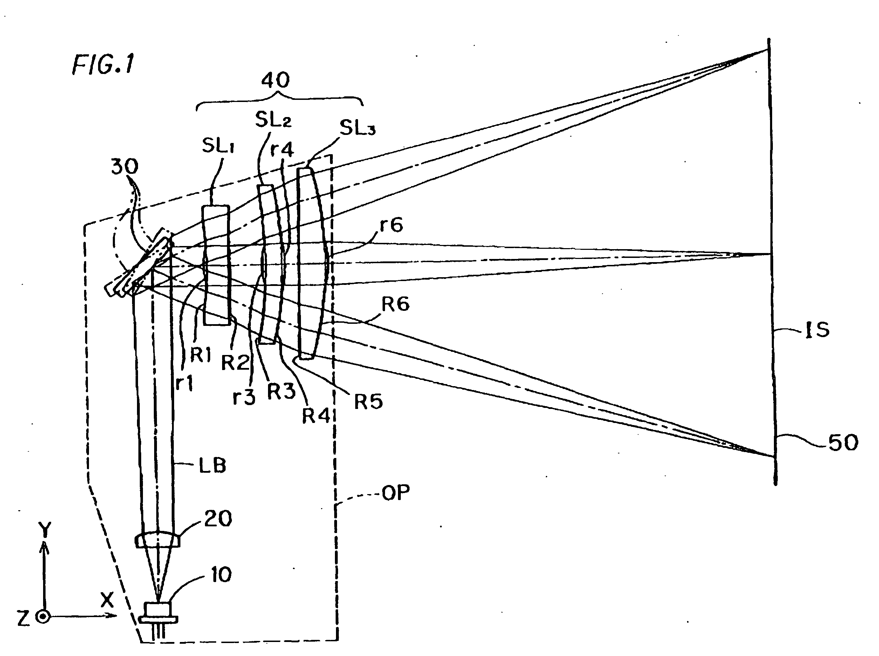

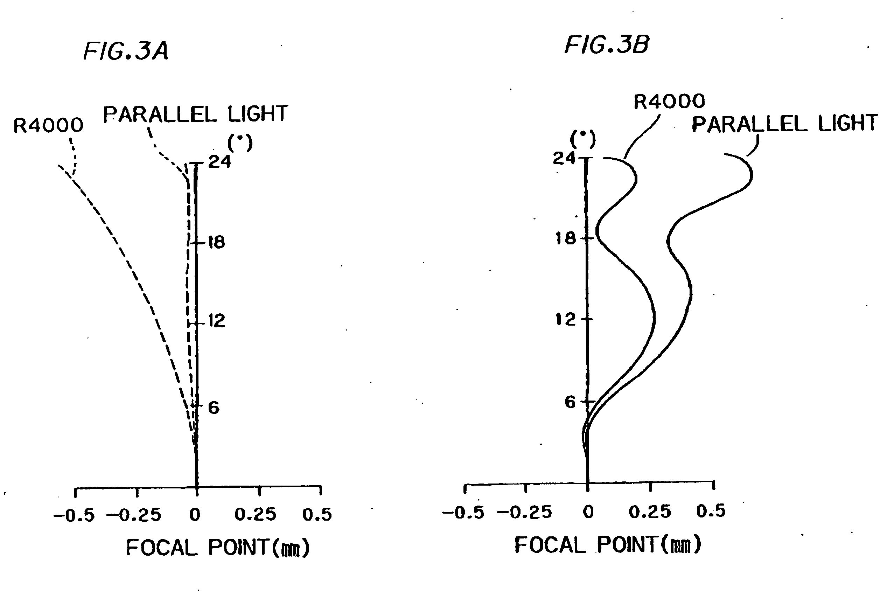

Fig. 1 is a view showing a structure of an apparatus for light beam scanning according to a first preferred embodiment. In the drawings except for Figs. 3A, 3B, 6A, 6B, 9A, 9B, 13A, 13B, 16A, 16B, 19A, 19B and 22, a three-dimensional coordinate system X-Y-Z is defined with an X-Y plane as a horizontal plane and a Z-axis direction as a vertical direction. Now, a structure and characteristics of the apparatus for light beam scanning according to the first preferred embodiment of the present invention will be described, with reference to Fig. 1.

The apparatus for light beam scanning according to the first preferred embodiment of the present invention comprises a semiconductor laser 10, a collimate lens 20, a galvanometer mirror 30, a scanning lens group 40, a surface-to-be-scanned 50 and the like, as shown in Fig. 1.

The scanning lens group 40, in particular, is formed by three groups of three scanning lenses SL₁, SL₂ and SL₃. These lenses, as one element, focus a light beam LB on the surface-to-be-scanned 50.

Functions of the respective portions above while the apparatus draws an image are as follows. First, the semiconductor laser 10 which is a light source is directly modulated by a control signal from a control part not shown, and emits the light beam LB in accordance with the control signal. The emitted light beam LB impinges upon the collimate lens 20, and leaves the collimate lens 20 as divergent light, not as light which is parallel within a main scanning surface (X-Y plane). The light beam LB leaving the collimate lens 20 impinges upon a mirror surface of the galvanometer mirror 30. The light beam LB reflected at the mirror surface enters a predetermined field angle of the scanning lens SL₁ while swinging within the X-Y plane due to oscillation of the minor surface of the galvanometer mirror 30 about a Z-axis direction. The light beam LB is thereafter converged while passing through the scanning lenses SL₁, SL₂ and SL₃, to be focused on the surface-to-be-scanned 50. An imaging point of the light beam LB which is focused on the surface-to-be-scanned 50 in this manner realizes main scanning in Y-axis direction (a main scanning direction which is optically corresponding to a first scanning direction) as the mirror surface of the galvanometer mirror 30 swings, while realizing subscanning as the surface-to-be-scanned 50 moves in a subscanning direction (corresponding to a second scanning direction: Z-axis direction).

Next, essential portions will be described in further detail.

In the apparatus for light beam scanning according to the first preferred embodiment, processing accuracies for processing the scanning lenses SL₁, SL₂ and SL₃ of the scanning lens group 40 are not very high as described earlier, and therefore, a center rise is easily created. Fig. 1 shows the scanning lenses SL₁, SL₂ and SL₃ having center rises.

When an apparatus for light beam scanning comprising such a scanning lens performs drawing, an image surface IS warps. To deal with this, on the premise that a center rise is created in each scanning lens, the apparatus for light beam scanning according to the first preferred embodiment is structured to lead the light beam LB, i.e., light diverges within the main scanning surface (which contains the main scanning direction: X-Y plane), so that the light beam LB impinges upon the scanning lens group 40.

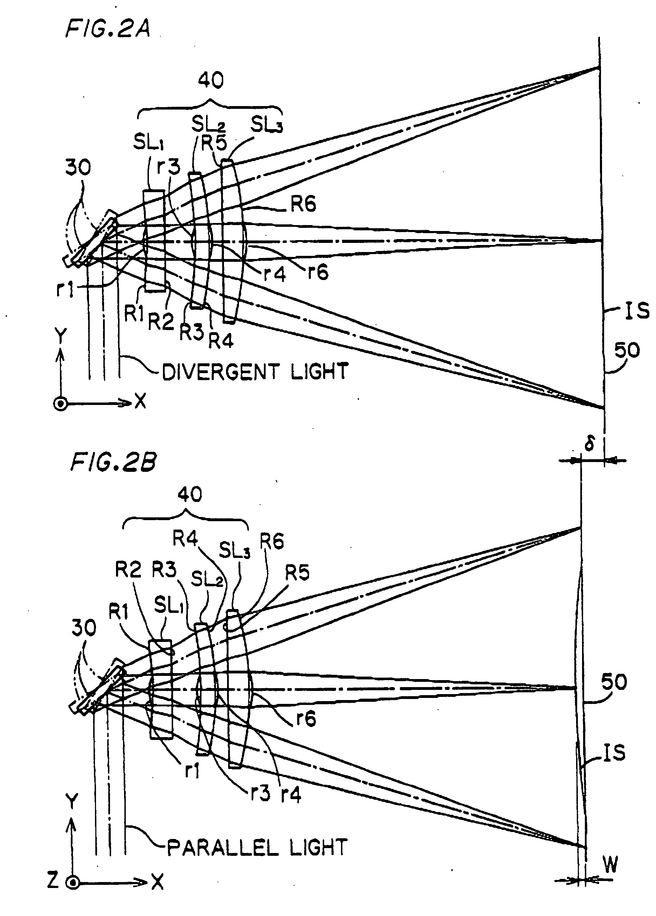

Figs. 2A and 2B are views showing a condition of curvatures of field where parallel light and divergent light are incident upon the scanning lenses with center rises. Fig. 2A is a view showing a condition in which divergent light which diverges within the main scanning surface impinges upon the scanning lenses and the curvature of field is adjusted to be approximately flat, while Fig. 2B shows, as a technique to be compared with the apparatus according to the first preferred embodiment, a condition in which parallel light enters the scanning lens group 40 and creates a curvature of field. As shown in Fig. 2B, center rises r1, r3, r4 and r6 are created in a first surface R1, a third surface R3, a fourth surface R4 and a sixth surface R6, respectively, of the scanning lens group 40. Because of this, a focal length at a center of a field angle of the scanning lens group 40 is shorter than where regularity deviations are not created, and in addition, since a regularity deviation is not created and light is focused in accordance with a design value at the both edges of the field angle of the scanning lens group 40, a resulting curvature of field has the image surface IS which as a whole warps a curvature width w toward the over side.

On the other hand, in Fig. 2A, the light beam LB, which is divergent light which diverges within the main scanning surface, impinges upon the scanning lens group 40. Hence, although an imaging position is displaced toward the plus side (i.e., the positive side of the X-axis) than where parallel light is incident upon, between the portion with the center rise at the center of the field angle and the portion which complies with the design value at the both edges of the field angle, the displacement of the imaging position toward the plus side at the center of the field angle is larger than that at the both edges of the field angle, the curvature of field tends to warp toward the under side. It then follows that when the light beam LB which diverges within the main scanning surface impinges upon the scanning lenses, an effect of correcting a curvature of field is obtained. Between a case where parallel light impinges and a case where divergent light impinges, the imaging positions in the X-axis direction are different by δ from each other. In the examples shown in Figs. 2A and 2B, the surface-to-bc-scanned 50 is set considering this.

### <1-2. First Preferred Example>

Now, a first preferred example will be described which requires the apparatus according to the first preferred embodiment to exhibit numerical characteristics as those in Table 1.

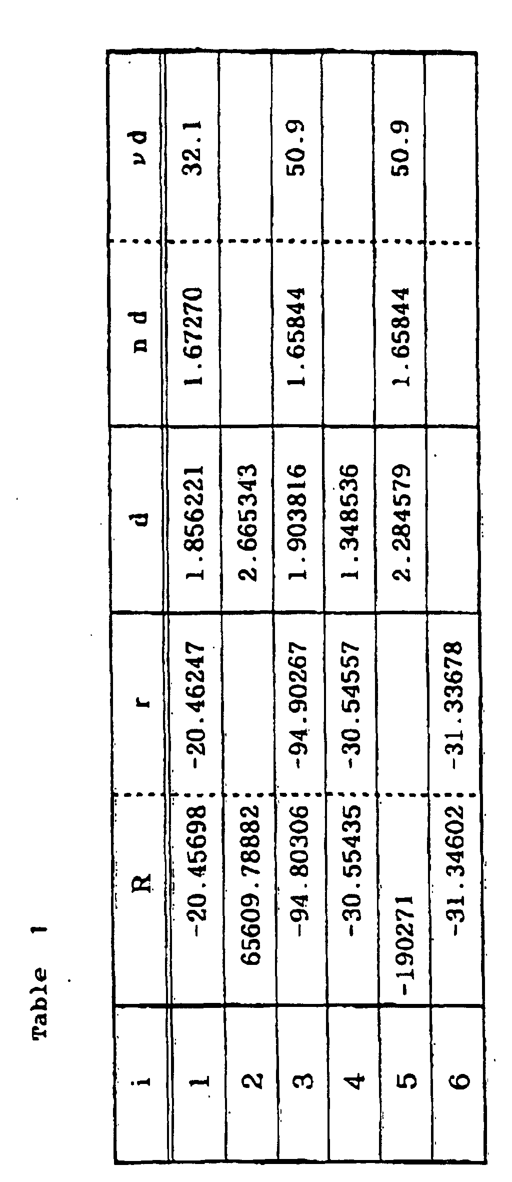

In Table 1, R : a radius of curvature of each surface, r : a radius of curvature of a center rise, d : a space between surfaces, nd : a refractive index of each lens with respect to a d-line, ν d : an Abbe number each lens with respect to a d-line. With respect to characteristics of the scanning lens group 40 as a whole, F-number : 31.5, a focal length : 100 mm, a maximum field angle : 24 degrees. A wavelength of the light beam LB is 633 nm.

To be proper to impinge upon the scanning lens group 40 which has the characteristics as above, the light beam LB must have such a degree of divergence within the main scanning surface that a distance from a reflection surface of the galvanometer mirror 30 back to a position at which the light beam LB converges as a point is about 4,000 mm. In the following, such a degree of divergence will be referred to as "R4000" or the like.

Figs. 3A and 3B are views showing a displacement in the focal position at a field angle position of 0 to 24 degrees between a case where parallel light and divergent light diverging within the main scanning surface impinge upon a scanning lens which has a center rise and a case where parallel light and divergent light diverging within the main scanning surface impinge upon a scanning lens which does not have a regularity deviation. Fig. 3A shows the case where a regularity deviation is not created in the scanning lens, whereas Fig. 3B shows the case where a center rise is created in the scanning lens.

Where a regularity deviation is not created in.the scanning lens, unlike in the case where parallel light impinges, as shown in Fig. 3A, an effect is obtained that a curvature of field is tilted toward the under side as divergent light diverging within the main scanning surface impinges. Where a center rise is created in the scanning lens, as clearly shown in Fig. 3B, the image surface is tilted 0.50 mm toward the under side in a similar manner as divergent light of R4000 impinges, and therefore, focal positions at the field angles across 0 to 24 degrees are close to a focal position at the center of the field angle, such an approximately flat image surface IS is obtained.

### <1-3. Effect Of First Preferred Embodiment>

As described above, in the apparatus for light beam scanning according to the first preferred embodiment, since a flux entering the scanning lenses is divergent light which diverges within the main scanning surface, it is possible to correct a curvature of field in an easy manner without increasing a processing accuracy of the lens surfaces of the scanning lenses which have center rises, and therefore, it is possible to attain an excellent drawing quality,

### 2. Second Preferred Embodiment

### <2-1. Structure And Characteristics Of Second Preferred Embodiment>

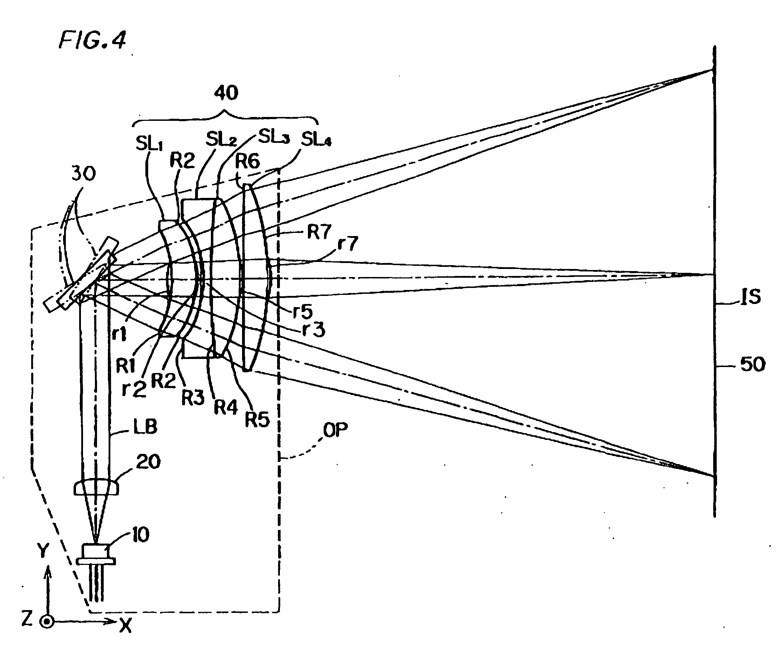

Fig. 4 is a view showing a structure of an apparatus for light beam scanning according to a second preferred embodiment.

A structure and characteristics of the apparatus for light beam scanning according to the second preferred embodiment of the present invention will be described, with reference to Fig. 4.

The apparatus for light beam scanning according to the second preferred embodiment of the present invention is similar in structure to the apparatus according to the first preferred embodiment, except for regarding the scanning lens group 40. Only difference is that the scanning lens group 40 is formed by three groups of four lenses SL₁, SL₂, SL₃ and SL₄ in the apparatus according to the second preferred embodiment. The scanning lenses SL₂ and SL₃ are in contact with each other at a fourth surface R4, and the other scanning lenses are disposed with air spaces among each other.

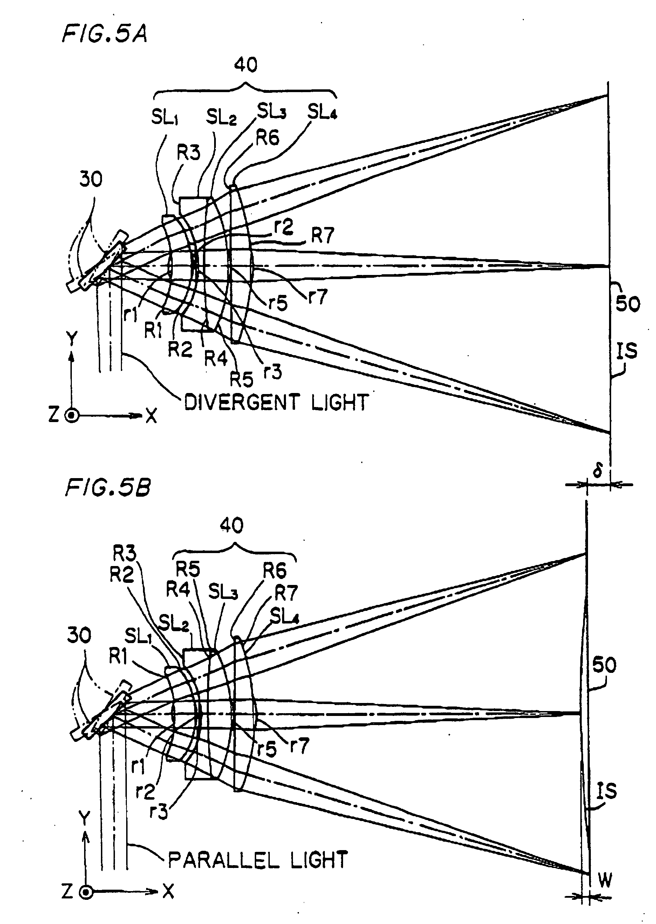

Functions of the respective portions of the apparatus according to the second preferred embodiment are approximately the same as those of the apparatus according to the first preferred embodiment. The apparatus according to the second preferred embodiment is also approximately similar to the apparatus according to the first preferred embodiment in that on a premise that each scanning lens has a center rise, the light beam LB which diverges within the main scanning surface impinges upon the scanning lens group 40. In Fig. 4 and in Figs. 5A and 5B which will be described in the following, center rises r1, r2, r3, r5 and r7 are created in a first surface R1, a second surface R2, a third surface R3, a fifth surface R5 and a seventh surface R7, respectively, of the scanning lens group 40.

Figs. 5A and 5B are views showing a condition of a curvature of field in a case where parallel light and the light beam LB which diverges within the main scanning surface impinges upon the scanning lenses which have center rises. Fig. 5A is a view showing a state where the light beam LB which diverges within the main scanning surface impinges upon the scanning lenses and a curvature of field is adjusted to be approximately flat, while Fig. 5B shows, as a technique to be compared with the apparatus according to the second preferred embodiment, a state where parallel light enters the scanning lens group 40 and creates a curvature of field. As shown in Fig. 5B, since each surface described above of the scanning lens group 40 has a center rise, a resulting curvature of field has the image surface IS which warps a curvature width w toward the over side.

On the other hand, in Fig. 5A, the light beam LB, which is divergent light which diverges within the main scanning surface, impinges upon the scanning lens group 40. Hence, the curvature of field is corrected and the image surface IS is accordingly flat, which is similar to the first preferred embodiment but is different from the case where parallel light impinges.

Between the case where parallel light impinges and the case where divergent light impinges, the imaging positions in the X-axis direction are different by δ from each other. In the examples shown in Figs. 5A and 5B, the surface-to-be-scanned 50 is set considering this.

### <2-2. Second Preferred Example>

Now, a second preferred example will be described which requires the apparatus according to the second preferred embodiment to exhibit numerical characteristics as those in Table 2.

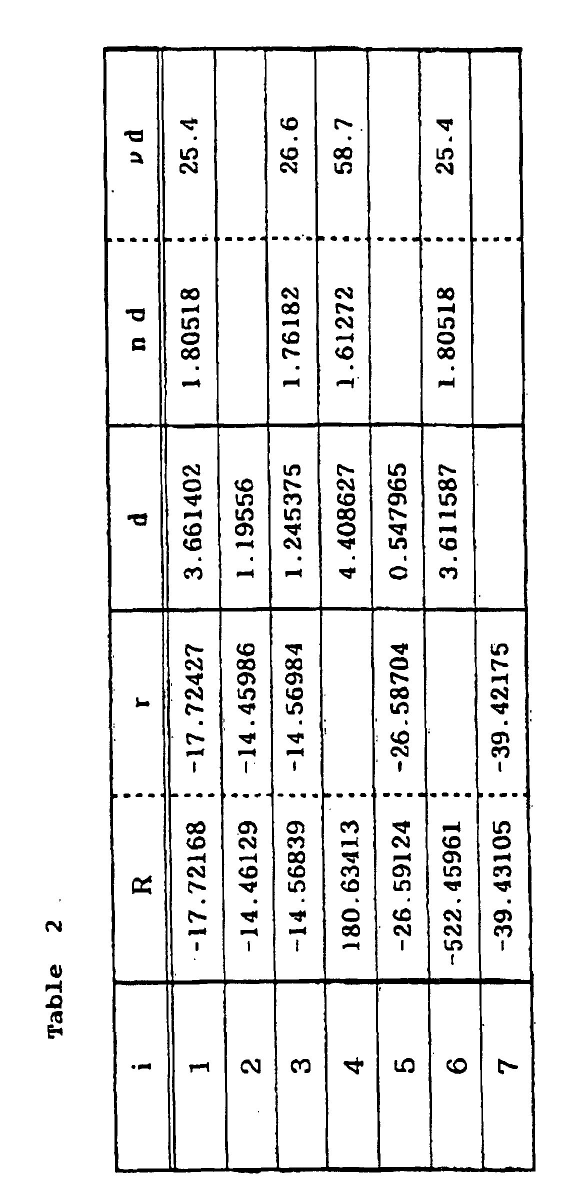

With respect to characteristics of the scanning lens group 40 as a whole, an F-number is 20, a focal length is 100 mm, and a maximum field angle is 25 degrees. A wavelength of the light beam LB is 780 nm. The symbols in Table 2 are similar to those used in Table 1.

To be proper to impinge upon the scanning lens group 40 which has the characteristics as above, a degree of divergence within the main scanning surface of the light beam, when expressed in a similar manner as to that for the first preferred embodiment, is R10000.

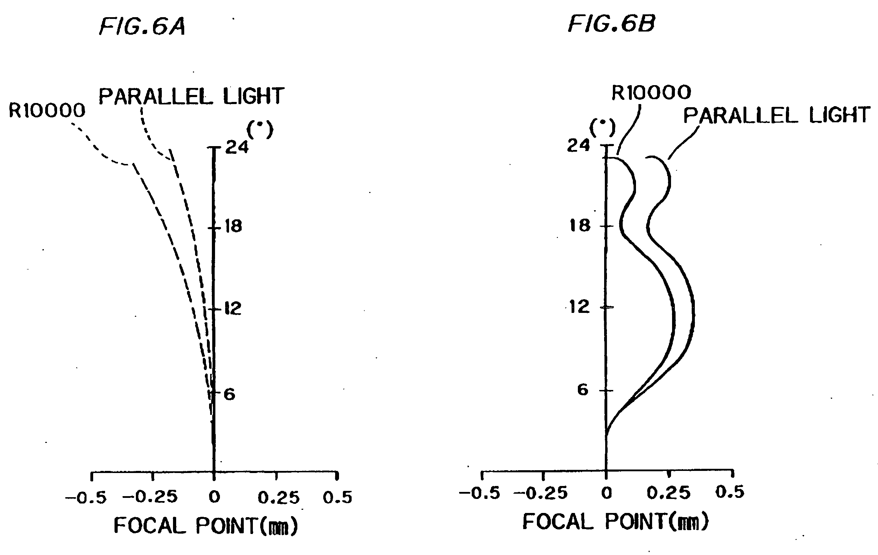

Figs. 6A and 6B are views showing a displacement in the focal position at a field angle position of 0 to 24 degrees between a case where parallel light and divergent light (R10000) diverging within the main scanning surface impinge upon a scanning lens which has a center rise and a case where parallel light and divergent light diverging within the main scanning surface impinge upon a scanning lens which does not have a regularity deviation. Fig. 6A shows the case where the scanning lens which does not have a regularity deviation, whereas Fig. 6B shows the case where the scanning lens which has a center rise.

When the scanning lens does not have a regularity deviation, as shown in Fig. 6A, unlike in the case where parallel light impinges, an effect is obtained that a curvature of field is tilted toward the under side as divergent light diverging within the main scanning surface impinges. Where a center rise is created in the scanning lens, as clearly shown in Fig. 6B, the image surface is tilted 0.18 mm toward the minus side in a similar manner as divergent light of R10000 impinges, and therefore, focal positions at the field angles across 0 to 24 degrees are close to a focal position at the center of the field angle, such an approximately flat image surface is obtained.

Having such a structure described above, the apparatus for light beam scanning according to the second preferred embodiment attains an effect which is similar to that obtained according to the first preferred embodiment.

### 3. Third Preferred Embodiment

### <3-1. Structure And Characteristics Of Third Preferred Embodiment>

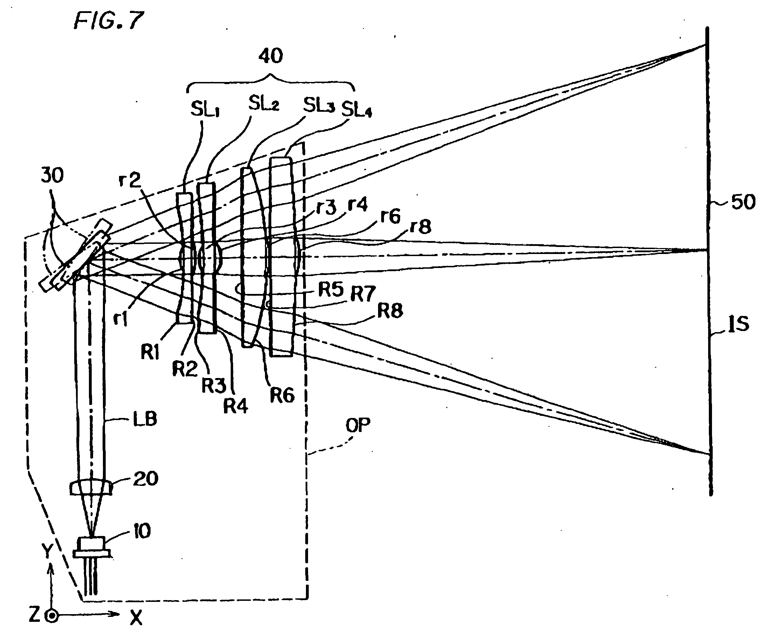

Fig. 7 is a view showing a structure of an apparatus for light beam scanning according to a third preferred embodiment.

A structure and characteristics of the apparatus for light beam scanning according to the third preferred embodiment of the present invention will be described, with reference to Fig. 7.

The apparatus for light beam scanning according to the third preferred embodiment of the present invention is similar in structure to the apparatus according to the first preferred embodiment, except for regarding the scanning lens group 40. Only difference is that the scanning lens group 40 is formed by four groups of four lenses SL₁, SL₂, SL₃ and SL₄ in the apparatus according to the third preferred embodiment. The scanning lenses are disposed with air spaces among each other.

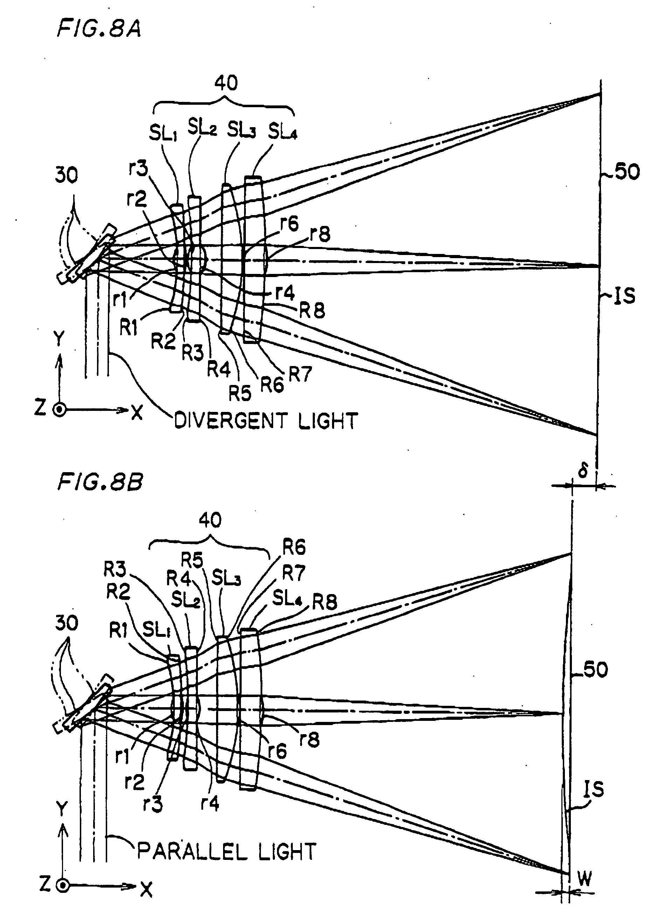

Functions of the respective portions of the apparatus according to the third preferred embodiment are approximately the same as those of the apparatus according to the first preferred embodiment. The apparatus according to the third preferred embodiment is also approximately similar to the apparatus according to the first preferred embodiment in that on a premise that each scanning lens has a center rise, the light beam LB which diverges within the main scanning surface impinges upon the scanning lens group 40. In Fig. 7 and in Figs. 8A and 8B which will be described in the following, center rises r1, r2, r3, r4, r6 and r8 are created in a first surface R1, a second surface R2, a third surface R3 a fourth surface R4, a sixth surface R6 and an eighth surface R8, respectively, of the scanning lens group 40.

Figs. 8A and 8B are views showing a condition of a curvature of field in a case where parallel light and the light beam LB which diverges within the main scanning surface impinges upon the scanning lenses which have center rises. Fig. 8A is a view showing a state where the light beam LB which diverges within the main scanning surface impinges upon the scanning lenses and a curvature of field is adjusted to be approximately flat, while Fig. 8B shows, as a technique to be compared with the apparatus according to the third preferred embodiment, a state where parallel light enters the scanning lens group 40 and creates a curvature of field. As shown in Fig. 8B, since each surface described above of the scanning lens group 40 has a center rise, a resulting curvature of field has the image surface IS which warps a curvature width w toward the over side.

On the other hand, in Fig. 8A, the light beam LB, which is divergent light which diverges within the main scanning surface, impinges upon the scanning lens group 40. Hence, the curvature of field is corrected and the image surface IS is accordingly flat, which is similar to the first preferred embodiment but is different from the case where parallel light impinges.

Between the case where parallel light impinges and the case where divergent light impinges, the imaging positions in the X-axis direction are different by δ from each other. In the examples shown in Figs. 8A and 8B, the surface-to-be-scanned 50 is set considering this.

### <3-2. Third Preferred Example>

Now, a third preferred example will be described which requires the apparatus according to the third preferred embodiment to exhibit numerical characteristics as those in Table 3.

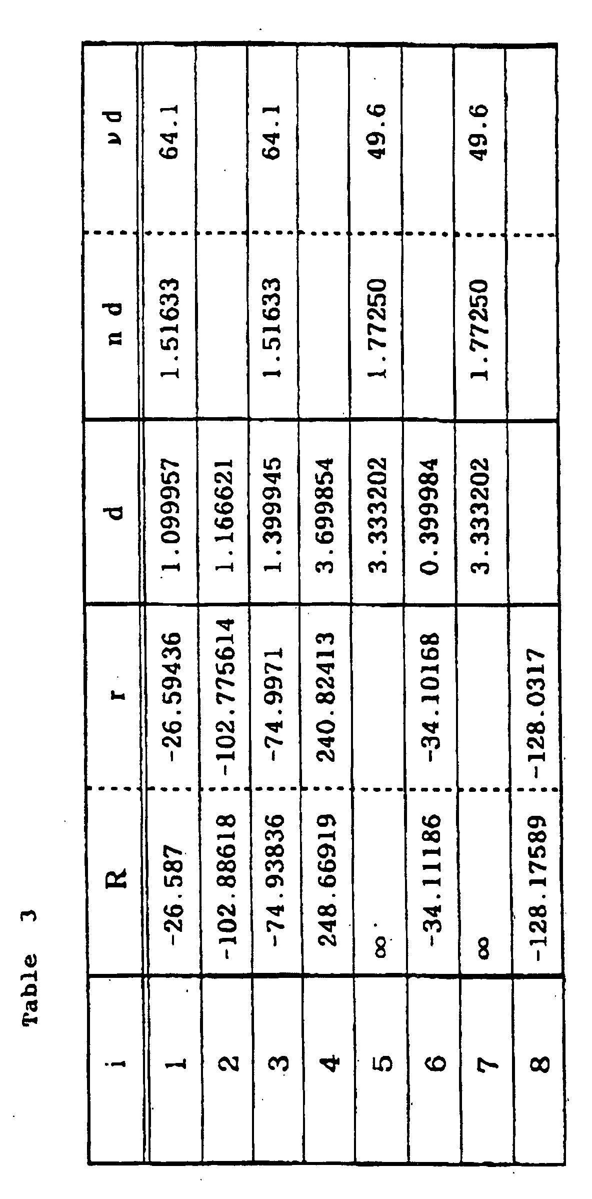

With respect to characteristics of the scanning lens group 40 as a whole, an F-number is 25, a focal length is 100 mm, and a maximum field angle is 21 degrees. A wavelength of the light beam LB is 780 nm. The symbols in Table 3 are similar to those used in Table 1.

To be proper to impinge upon the scanning lens group 40 which has the characteristics as above, a degree of divergence within the main scanning surface of the light beam, when expressed in a similar manner as to that for the first preferred embodiment, is R3000.

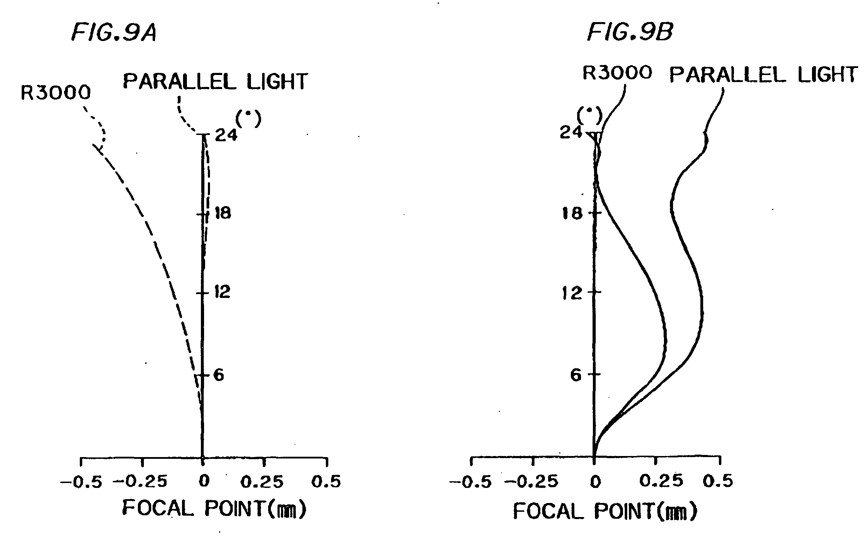

Fig. 9A is a view showing a displacement in the focal position at a field angle position of 0 to 24 degrees in a case where parallel light and divergent light diverging within the main scanning surface impinge upon a scanning lens which does not have a regularity deviation, and Fig. 9B is a view showing a displacement in the focal position at a field angle position of 0 to 24 degrees in a case where parallel light and divergent light (R3000) diverging within the main scanning surface impinge upon a scanning lens which has a center rise.

When the scanning lens does not have a regularity deviation, as shown in Fig. 9A, unlike in the case where parallel light impinges, an effect is obtained that a curvature of field is tilted toward the under side as divergent light diverging within the main scanning surface impinges. Where a center rise is created in the scanning lens, as clearly shown in Fig. 9B, the image surface is tilted 0.50 mm toward the under side in a similar manner as divergent light of R3000 impinges, and therefore, focal positions at the field angles across 0 to 24 degrees are close to a focal position at the center of the field angle, such an approximately flat image surface is obtained.

Having such a structure described above, the apparatus for light beam scanning according to the third preferred embodiment attains an effect which is similar to that obtained according to the first preferred embodiment.

### 4. Fourth Preferred Embodiment

### <4-1. Structure And Characteristics Of Fourth Preferred Embodiment>

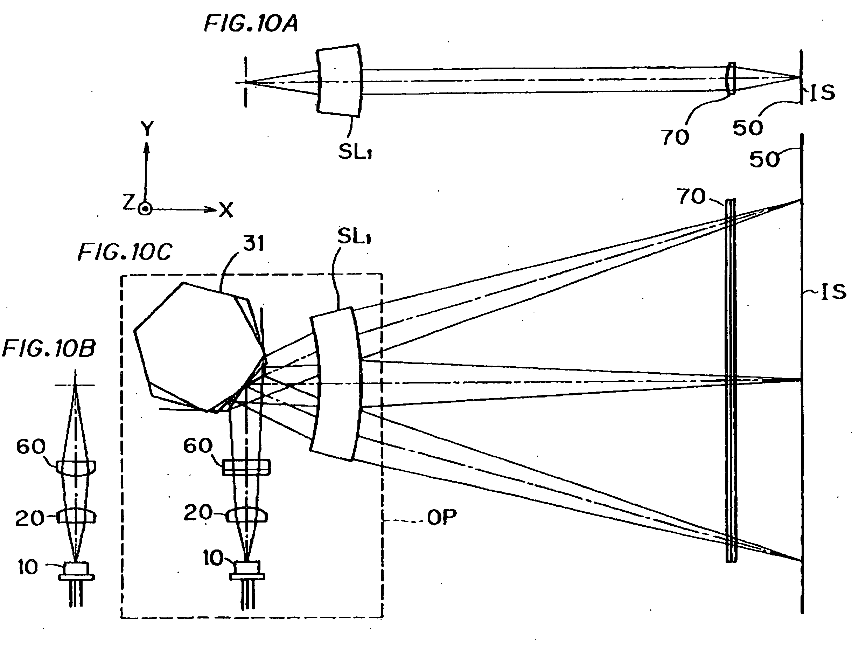

Figs. 10A to 10C are views showing a structure of an apparatus for light beam scanning according to a fourth preferred embodiment. Figs. 10A and 10B are side views of the light beam LB, while Fig. 10C is a plan view of the apparatus for light beam scanning. A structure and characteristics of the apparatus for light beam scanning according to the fourth preferred embodiment of the present invention will be described, with reference to Figs. 10A to 10C.

As shown in Figs. 10A to 10C, the apparatus for light beam scanning according to the fourth preferred embodiment comprises the semiconductor laser 10, the collimate lens 20, a cylindrical lens 60 (corresponding to an imaging optical system), a polygon mirror 31, a scanning lens group SL₁, a cylindrical lens 70 (corresponding to facet error correcting means), the surface-to-be-scanned 50 and the like.

In a first imaging optical system which comprises the collimate lens 20 and the cylindrical lens 60, the light beam LB having a degree of divergence which is adjusted by the collimate lens 20 is focused by the cylindrical lens 60 only in the subscanning direction (Z-axis direction), and the light beam LB diverges only within the main scanning surface (X-Y plane) in the vicinity of a mirror surface of the polygon mirror 31 while impinging in a conjugation with the semiconductor laser 10 within a subscanning surface (X-Z plane).

The polygon mirror 31, while rotating, reflects the light beam LB at the respective mirror surfaces of the polygon mirror 31, thereby oscillating the light beam LB in the main scanning direction (Y-axis direction).

By the way, a polygon mirror, when processed at a low processing accuracy, may have "a facet error." That is, the polygon mirror is in a condition that each mirror surface is a little tilted with respect to the vertical direction (Z-axis direction). If the light beam LB impinges upon and is reflected at the mirror surfaces having a facet error, a scanning line may be shifted with respect to the subscanning direction on the surface-to-be scanned 50 in some cases. Different from this, in the apparatus for light beam scanning according to the fourth preferred embodiment, the cylindrical lens 70 is disposed between the scanning lenses and the surface-to-be-scanned 50 in such a manner that the cylindrical lens 70 has a power only in the subscanning direction (Z-axis direction). This ensures that the mirror surfaces of the polygon mirror 31 which have a facet error and the surface-to-be-scanned 50 are in a conjugation with each other so that a displacement of a scanning line by each surface is corrected.

In the fourth preferred embodiment, unlike in the first to the third preferred embodiments, the cylindrical lens 60 is used which prevents a facet error which is caused by use of the polygon mirror 31. However, when any one of the scanning lens group which is used in the first to the third preferred embodiments is used as the scanning lens group SL₁ for the fourth preferred embodiment, the same effect as that obtained in the first to the third preferred embodiment is obtained.

In other words, this is because the light beam LB which diverges to the same extent as in the first to the third preferred embodiments impinges upon the scanning lens group SL₁ since the cylindrical lens which is used in the fourth preferred embodiment has a power only in the subscanning direction but does not have a power in the main scanning direction, while the degree of divergence of the light beam LB which is important to attain the effect above is related to the main scanning direction.

Since the cylindrical lens does not have a power (refractive power) in the main scanning direction, considering only the main scanning surface, after all, it is possible to correct a curvature of field as in the first to the third preferred embodiments. Further, since the apparatus according to the fourth preferred embodiment has a structure in which a varied pitch of a scanning line due to a facet error of the mirror surfaces of the polygon mirror 31 as the cylindrical lens 70 maintains an optical conjugation between the mirror surfaces and the surface-to-be-scanned 50 in the subscanning surface, an influence of the facet error of the mirror surfaces of the polygon mirror 31 is suppressed, and consequently, a further more excellent drawing quality is obtained.

### 5. Fifth Preferred Embodiment

### <5-1. Structure And Characteristics Of Fifth Preferred Embodiment>

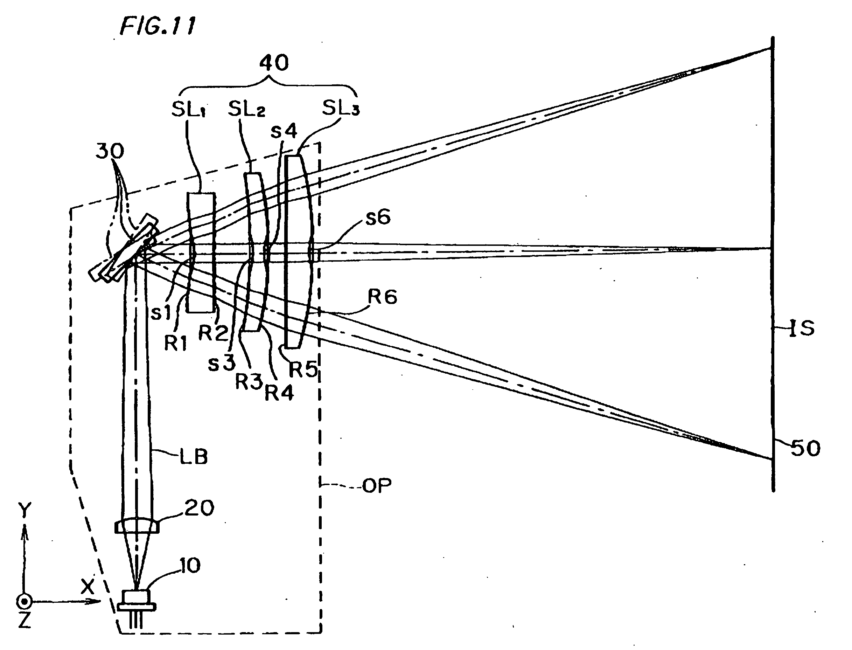

Fig. 11 is a view showing a structure of an apparatus for light beam scanning according to a fifth preferred embodiment. In the following, a structure and characteristics of the apparatus for light beam scanning according to the fifth preferred embodiment of the present invention will be described, with reference to Fig. 11.

The apparatus for light beam scanning according to the third preferred embodiment of the present invention comprises the semiconductor laser 10, the collimate lens 20, the galvanometer mirror 30, the scanning lens group 40, the surface-to-be-scanned 50 and the like, as shown in Fig. 11.

The scanning lens group 40, in particular, is formed by three groups of three scanning lenses SL₁, SL₂ and SL₃. These lenses, as one element, focus a light beam LB on the surface-to-be-scanned 50.

Functions of the respective portions above while the apparatus draws an image are as follows. First, the semiconductor laser 10 which is a light source is directly modulated by a control signal from a control part not shown, and emits the light beam LB in accordance with the control signal. The emitted light beam LB impinges upon the collimate lens 20, and leaves the collimate lens 20 as convergent light, not as light which is parallel within the main scanning surface (X-Y plane). The light beam LB leaving the collimate lens 20 impinges upon a mirror surface of the galvanometer mirror 30. The light beam LB reflected at the mirror surface enters a predetermined field angle of the scanning lens SL₁ while swinging within the X-Y plane due to oscillation of the mirror surface of the galvanometer mirror 30 about a Z-axis direction. The light beam LB is thereafter converged while passing through the scanning lenses SL₁, SL₂ and SL₃, to be focused on the surface-to-be-scanned 50. An imaging point of the light beam LB which is focused on the surface-to-be-scanned 50 in this manner realizes main scanning in Y-axis direction (a main scanning direction which is optically corresponding to a first scanning direction) as the mirror surface of the galvanometer mirror 30 swings, while realizing subscanning as the surface-to-be-scanned 50 moves in the subscanning direction (corresponding to a second scanning direction: Z-axis direction).

Next, essential portions will be described in further detail.

In the apparatus for light beam scanning according to the fifth preferred embodiment, processing accuracies for processing the scanning lenses SL₁, SL₂ and SL₃ of the scanning lens group 40 are not very high as described earlier, and therefore, a center sink is easily created. Fig. 11 shows the scanning lenses SL₁, SL₂ and SL₃ having center sinks.

When an apparatus for light beam scanning comprising such a scanning lens performs drawing, an image surface IS warps. To deal with this, on the premise that a center sink is created in each scanning lens, the apparatus for light beam scanning according to the fifth preferred embodiment is structured to lead the light beam LB, i.e., light converges within the main scanning surface (which contains the main scanning direction: X-Y plane), so that the light beam LB impinges upon the scanning lens group 40.

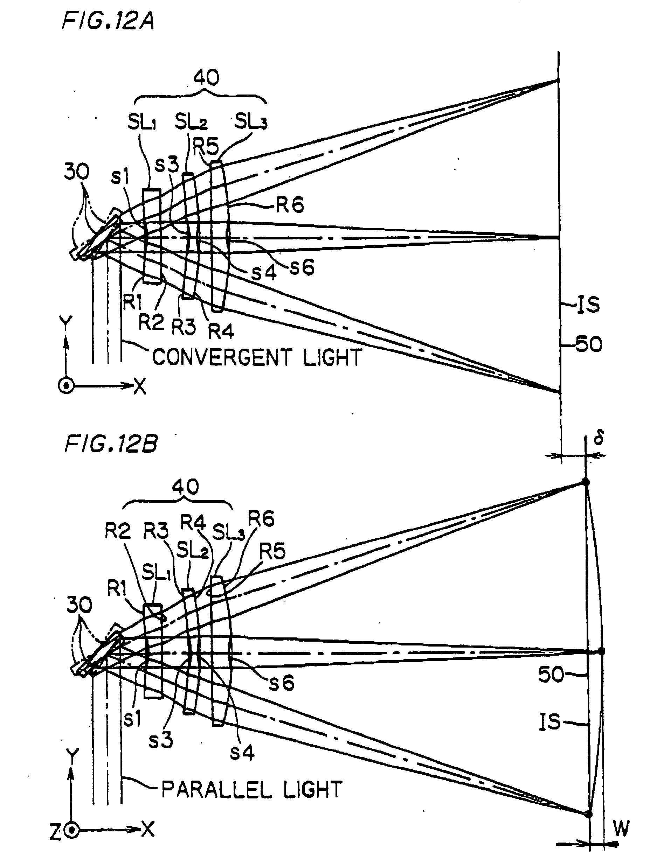

Figs. 12A and 12B are views showing a condition of curvatures of field where parallel light and convergent light are incident upon the scanning lenses with center sinks. Fig. 12A is a view showing a condition in which convergent light which converges within the main scanning surface impinges upon the scanning lenses and the curvature of field is adjusted to be approximately flat, while Fig. 12B shows, as a technique to be compared with the apparatus according to the fifth preferred embodiment, a condition in which parallel light enters the scanning lens group 40 and creates a curvature of field. As shown in Fig. 12B, center sinks s1, s3, s4 and s6 are created in a first surface R1, a third surface R3, a fourth surface R4 and a sixth surface R6, respectively, of the, scanning lens group 40. Because of this, a focal length at a center of a field angle of the scanning lens group 40 is longer than where regularity deviations are not created, and in addition, since a regularity deviation is not created and light is focused in accordance with a design value at the both edges of the field angle of the scanning lens group 40, a resulting curvature of field has the image surface IS which as a whole warps a curvature width w toward the under side.

On the other hand, in Fig. 12A, the light beam LB, which is convergent light which converges within the main scanning surface, impinges upon the scanning lens group 40. Hence, although an imaging position is displaced toward the minus side (i.e., the negative side of the X-axis) than where parallel light is incident upon, between the portion with the center sink at the center of the field angle and the portion which complies with the design value at the both edges of the field angle, the displacement of the imaging position toward the minus side at the center of the field angle is larger than that at the both edges of the field angle, the curvature of field tends to warp toward the over side. It then follows that when the light beam LB which converges within the main scanning surface impinges upon the scanning lenses, an effect of correcting a curvature of field is obtained. Between a case where parallel light impinges and a case where convergent light impinges, the imaging positions in the X-axis direction are different by δ from each other. In the examples shown in Figs. 12A and 12B, the surface-to-be-scanned 50 is set considering this.

### <5-2. Fourth Preferred Example>

Now, a fourth preferred example will be described which requires the apparatus according to the fifth preferred embodiment to exhibit numerical characteristics as those in Table 4.

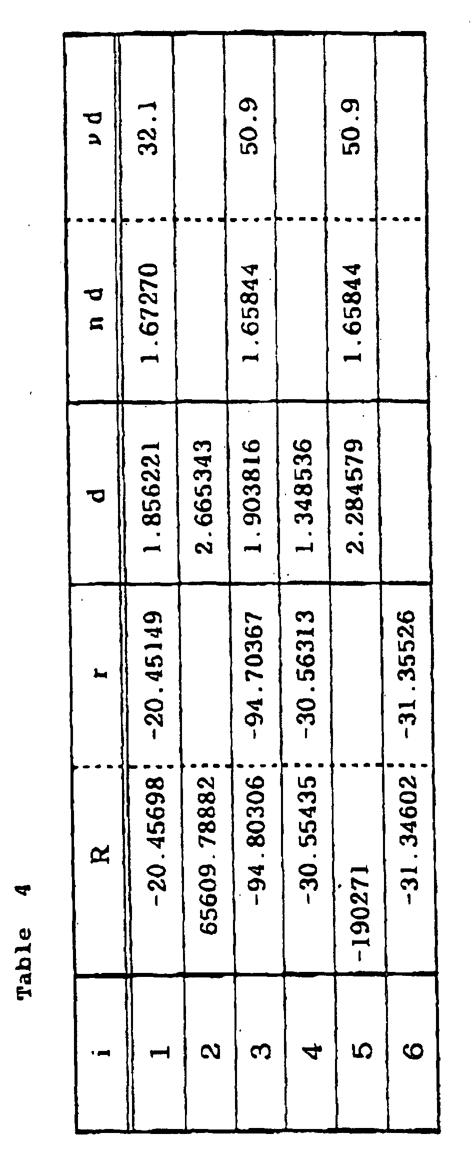

In Table 4, R : a radius of curvature of each surface, r : a radius of curvature of a center sink, d : a space between surfaces, nd : a refractive index of each lens with respect to a d-line, ν d : an Abbe number each lens with respect to a d-line. With respect to characteristics of the scanning lens group 40 as a whole, F-number : 31, a focal length : 100 mm, a maximum field angle : 24 degrees. A wavelength of the light beam LB is 633 nm.

To be proper to impinge upon the scanning lens group 40 which has the characteristics as above, the light beam LB must have such a degree of convergence within the main scanning surface that a distance from a reflection surface of the galvanometer mirror 30 (supposing that the light beam LB passed through the reflection surface) to a position at which the light beam LB converges as a point is about - 4,000 mm. In the following, such a degree of convergence will be referred to as "R-4000" or the like.

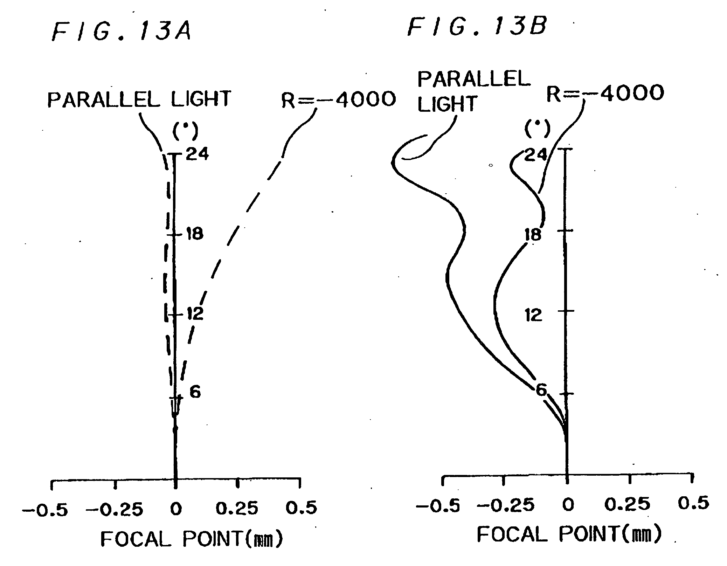

Figs. 13A and 13B are views showing a displacement in the focal position at a field angle position of 0 to 24 degrees between a case where parallel light and convergent light converging within the main scanning surface impinge upon a scanning lens which has a center sink and a case where parallel light and convergent light converging within the main scanning surface impinge upon a scanning lens which does not have a regularity deviation. Fig. 13A shows the case where a regularity deviation is not created in the scanning lens, whereas Fig. 13B shows the case where a center sink is created in the scanning lens.

Where a regularity deviation is not created in the scanning lens, unlike in the case where parallel light impinges, as shown in Fig. 13A, an effect is obtained that a curvature of field is tilted toward the over side as convergent light converging within the main scanning surface impinges. Where a center sink is created in the scanning lens, as clearly shown in Fig. 13B, the image surface is tilted 0.50 mm toward the over side in a similar manner as convergent light of R-4000 impinges, and therefore, focal positions at the field angles across 0 to 24 degrees are close to a focal position at the center of the field angle, such an approximately flat image surface IS is obtained.

### <5-3. Effect Of Fifth Preferred Embodiment>

As described above, in the apparatus for light beam scanning according to the fifth preferred embodiment, since a flux entering the scanning lenses is convergent light which converges within the main scanning surface, it is possible to correct a curvature of field in an easy manner without increasing a processing accuracy of the lens surfaces of the scanning lenses which have center sinks, and therefore, it is possible to attain an excellent drawing quality.

### 6. Sixth Preferred Embodiment

### <6-1. Structure And Characteristics Of Sixth Preferred Embodiment>

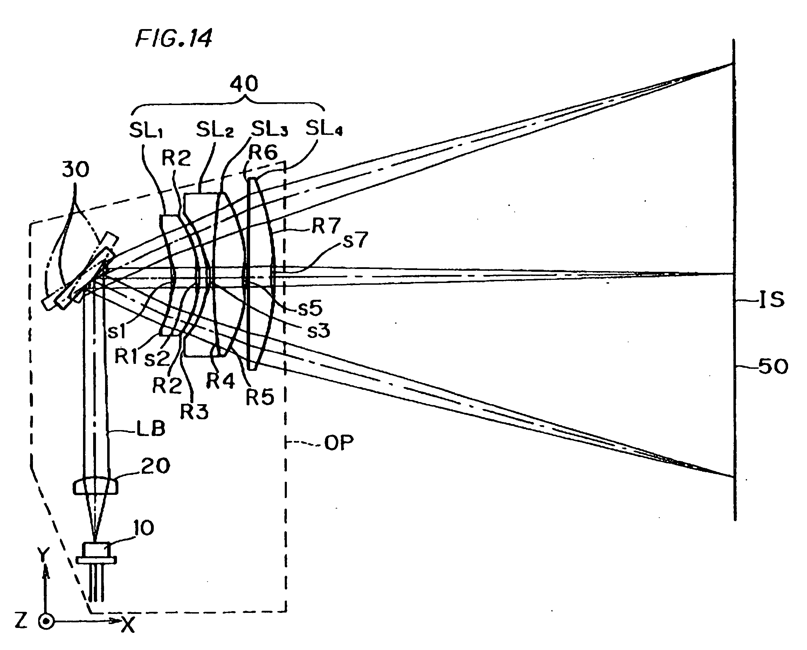

Fig. 14 is a view showing a structure of an apparatus for light beam scanning according to a sixth preferred embodiment. In the following, a structure and characteristics of the apparatus for light beam scanning according to the sixth preferred embodiment of the present invention will be described, with reference to Fig. 14.

The apparatus for light beam scanning according to the sixth preferred embodiment of the present invention is similar in structure to the apparatus according to the fifth preferred embodiment, except for regarding the scanning lens group 40. Only difference is that the scanning lens group 40 is formed by three groups of four lenses SL₁, SL₂, SL₃ and SL₄ in the apparatus according to the sixth preferred embodiment. The scanning lenses SL₂ and SL₃ are in contact with each other at a fourth surface R4, and the other scanning lenses are disposed with air spaces among each other.

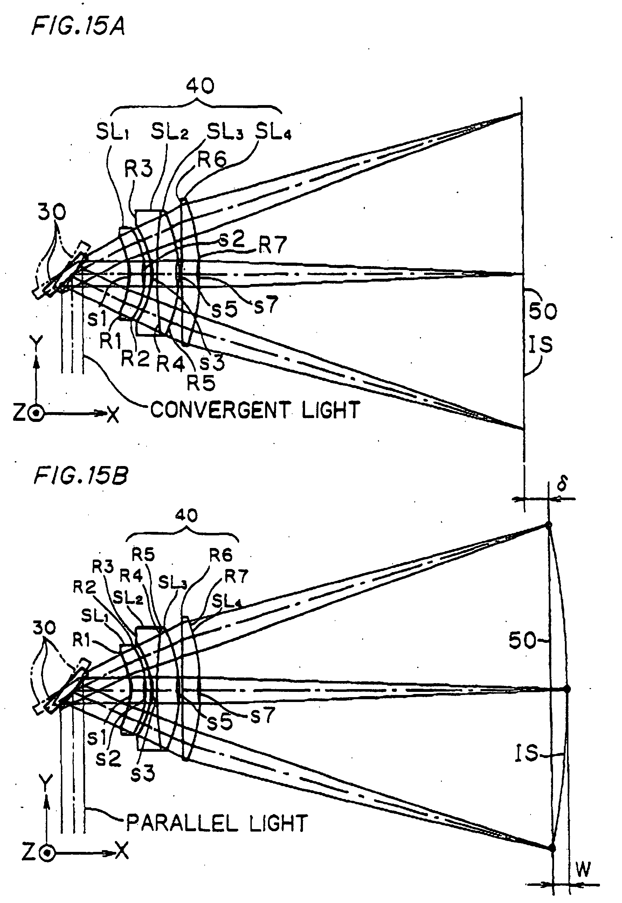

Functions of the respective portions of the apparatus according to the sixth preferred embodiment are approximately the same as those of the apparatus according to the fifth preferred embodiment. The apparatus according to the sixth preferred embodiment is also approximately similar to the apparatus according to the first preferred embodiment in that on a premise that each scanning lens has a center sink, the light beam LB which converges within the main scanning surface impinges upon the scanning lens group 40. In Fig. 14 and in Figs. 15A and 15B which will be described in the following, center sinks s1, s2, s3, s5 and s7 are created in a first surface R1, a second surface R2, a third surface R3, a fifth surface R5 and a seventh surface R7, respectively, of the scanning lens group 40.

Figs. 15A and 15B are views showing a condition of a curvature of field in a case where parallel light and the light beam LB which converges within the main scanning surface impinges upon the scanning lenses which have center sinks. Fig. 15A is a view showing a state where the light beam LB which converges within the main scanning surface impinges upon the scanning lenses and a curvature of field is adjusted to be approximately flat, while Fig. 15B shows, as a technique to be compared with the apparatus according to the sixth preferred embodiment, a state where parallel light enters the scanning lens group 40 and creates a curvature of field. As shown in Fig. 15B, since each surface described above of the scanning lens group 40 has a center sink, a resulting curvature of field has the image surface IS which warps a curvature width w toward the under side.

On the other hand, in Fig. 15A, the light beam LB, which is convergent light which converges within the main scanning surface, impinges upon the scanning lens group 40. Hence, the curvature of field is corrected and the image surface IS is accordingly flat, which is similar to the fifth preferred embodiment but is different from the case where parallel light impinges.

Between the case where parallel light impinges and the case where convergent light impinges, the imaging positions in the X-axis direction are different by δ from each other. In the examples shown in Figs. 15A and 15B, the surface-to-be-scanned 50 is set considering this.

### <6-2. Fifth Preferred Example>

Now, a fifth preferred example will be described which requires the apparatus according to the sixth preferred embodiment to exhibit numerical characteristics as those in Table 5.

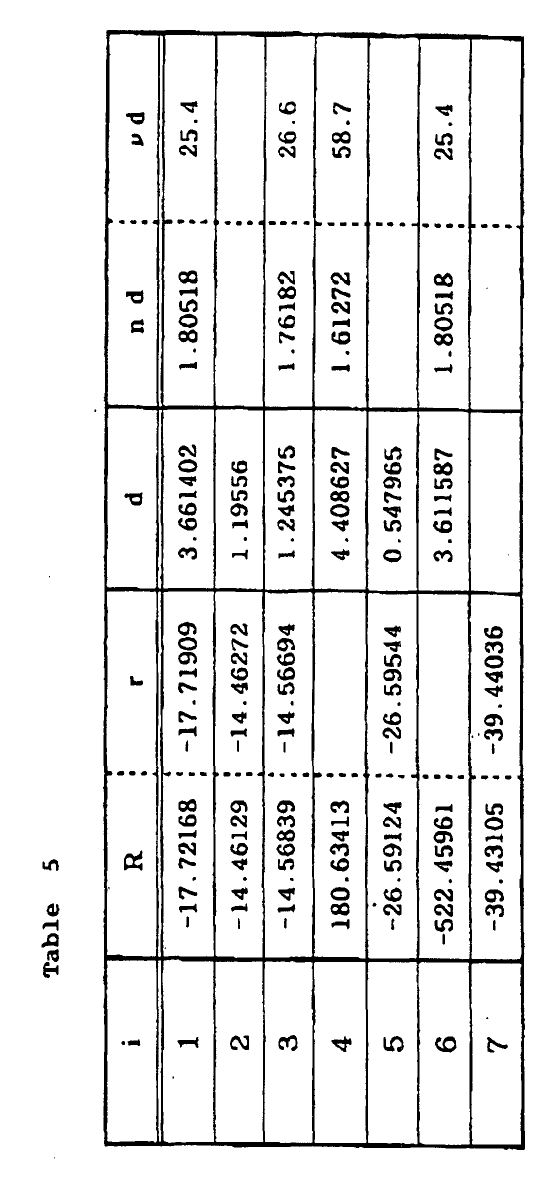

With respect to characteristics of the scanning lens group 40 as a whole, an F-number is 20, a focal length is 100 mm, and a maximum field angle is 25 degrees. A wavelength of the light beam LB is 780 nm. The symbols in Table 5 are similar to those used in Table 4.

To be proper to impinge upon the scanning lens group 40 which has the characteristics as above, a degree of convergence within the main scanning surface of the light beam, when expressed in a similar manner as to that for the fourth preferred embodiment, is R-10000.

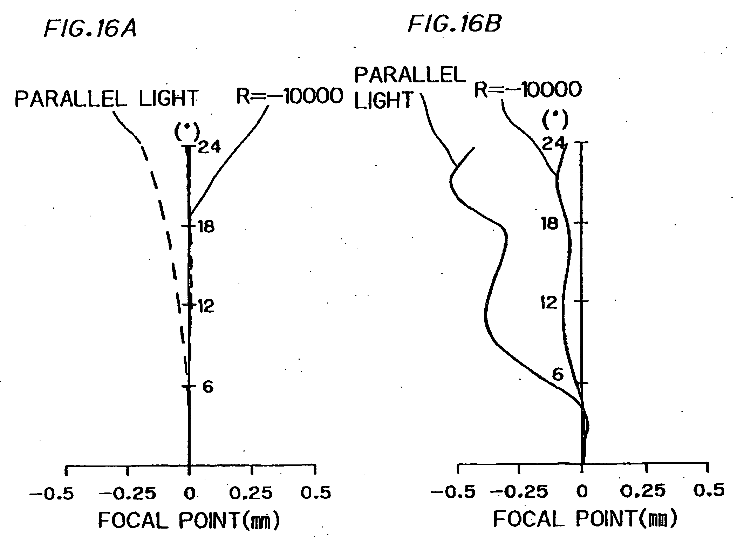

Figs. 16A and 16B are views showing a displacement in the focal position at a field angle position of 0 to 24 degrees between a case where parallel light and convergent light (R-10000) converging within the main scanning surface impinge upon a scanning lens which has a center sink and a case where parallel light and convergent light onverging within the main scanning surface impinge upon a scanning lens which does not have a regularity deviation. Fig. 16A shows the case where the scanning lens which does not have a regularity deviation, whereas Fig. 16B shows the case where the scanning lens which has a center sink.

When the scanning lens does not have a regularity deviation, as shown in Fig. 16A, unlike in the case where parallel light impinges, an effect is obtained that a curvature of field is tilted toward the over side as convergent light converging within the main scanning surface impinges. Where a center sink is created in the scanning lens, as clearly shown in Fig. 16B, the image surface is tilted 0.18 mm toward the plus side in a similar manner as convergent light of R-10000 impinges, and therefore, focal positions at the field angles across 0 to 24 degrees are close to a focal position at the center of the field angle, such an approximately flat image surface is obtained.

Having such a structure described above, the apparatus for light beam scanning according to the sixth preferred embodiment attains an effect which is similar to that obtained according to the fifth preferred embodiment.

### 7. Seventh Preferred Embodiment

### <7-1. Structure And Characteristics Of Seventh Preferred Embodiment>

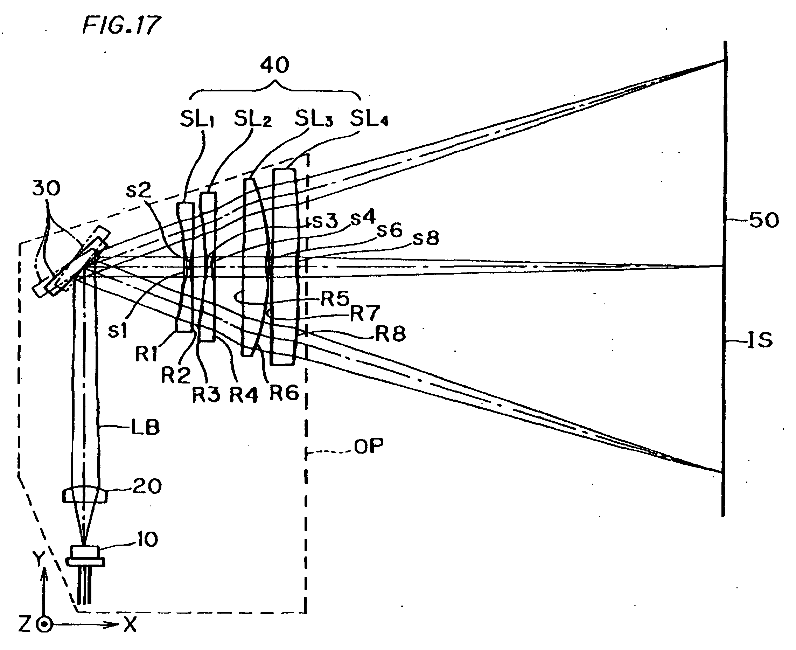

Fig. 17 is a view showing a structure of an apparatus for light beam scanning according to a seventh preferred embodiment.

A structure and characteristics of the apparatus for light beam scanning according to the seventh preferred embodiment of the present invention will be described, with reference to Fig. 17.

The apparatus for light beam scanning according to the seventh preferred embodiment of the present invention is similar in structure to the apparatus according to the fifth preferred embodiment, except for regarding the scanning lens group 40. Only difference is that the scanning lens group 40 is formed by four groups of four lenses SL₁, SL₂, SL₃ and SL₄ in the apparatus according to the seventh preferred embodiment. The scanning lenses are disposed with air spaces among each other.

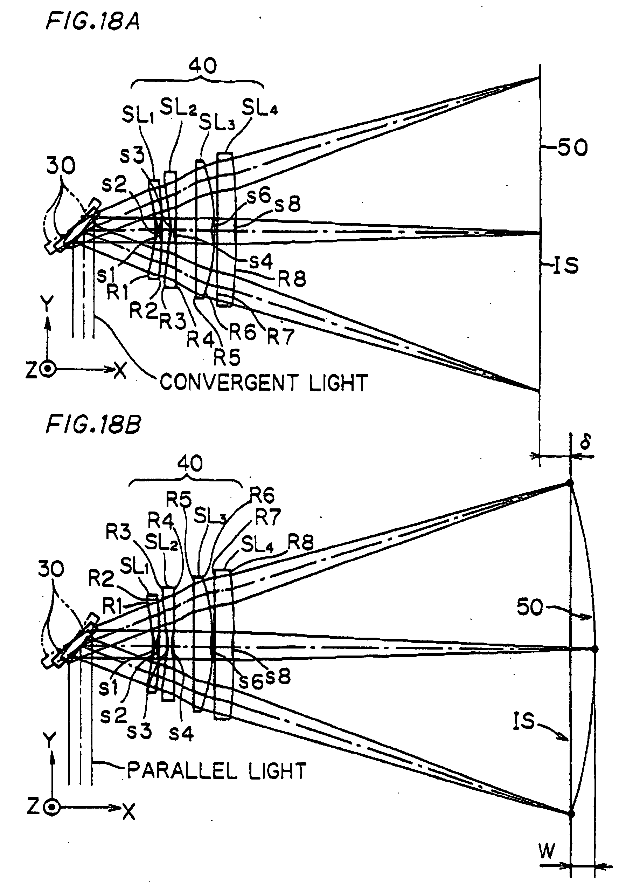

Functions of the respective portions of the apparatus according to the seventh preferred embodiment are approximately the same as those of the apparatus according to the fifth preferred embodiment. The apparatus according to the seventh preferred embodiment is also approximately similar to the apparatus according to the fifth preferred embodiment in that on a premise that each scanning lens has a center sink, the light beam LB which converges within the main scanning surface impinges upon the scanning lens group 40. In Fig. 17 and in Figs. 18A and 18B which will be described in the following, center sinks s1, s2, s3, s4, s6 and s8 are created in a first surface R1, a second surface R2, a third surface R3, a fourth surface R4, a sixth surface R6 and an eighth surface R8, respectively, of the scanning lens group 40.

Figs. 18A and 18B are views showing a condition of a curvature of field in a case where parallel light and the light beam LB which converges within the main scanning surface impinges upon the scanning lenses which have center sinks. Fig. 18A is a view showing a state where the light beam LB which converges within the main scanning surface impinges upon the scanning lenses and a curvature of field is adjusted to be approximately flat, while Fig. 18B shows, as a technique to be compared with the apparatus according to the seventh preferred embodiment, a state where parallel light enters the scanning lens group 40 and creates a curvature of field. As shown in Fig. 18B, since each surface described above of the scanning lens group 40 has a center sink, a resulting curvature of field has the image surface IS which warps a curvature width w toward the under side.

On the other hand, in Fig. 18A, the light beam LB, which is convergent light which converges within the main scanning surface, impinges upon the scanning lens group 40. Hence, the curvature of field is corrected and the image surface IS is accordingly flat, which is similar to the fifth preferred embodiment but is different from the case where parallel light impinges.

Between the case where parallel light impinges and the case where convergent light impinges, the imaging positions in the X-axis direction are different by δ from each other. In the examples shown in Figs. 18A and 18B, the surface-to-be-scanned 50 is set considering this.

### <7-2. Sixth Preferred Example>

Now, a sixth preferred example will be described which requires the apparatus according to the seventh preferred embodiment to exhibit numerical characteristics as those in Table 6.

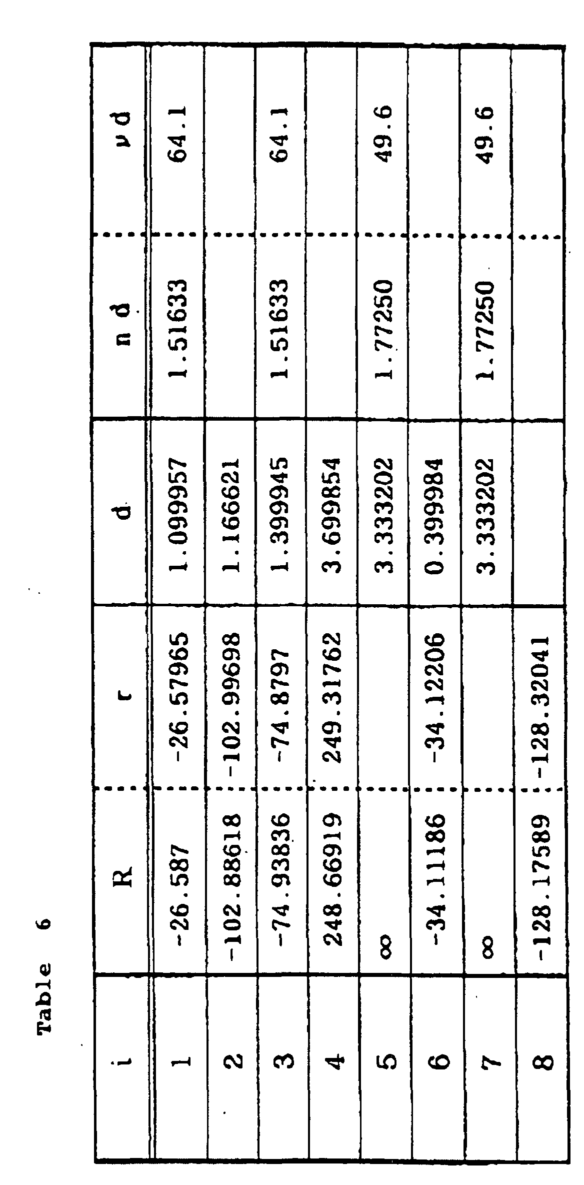

With respect to characteristics of the scanning lens group 40 as a whole, an F-number is 25, a focal length is 100 mm, and a maximum field angle is 21 degrees. A wavelength of the light beam LB is 780 nm. The symbols in Table 6 are similar to those used in Table 4.

To be proper to impinge upon the scanning lens group 40 which has the characteristics as above, a degree of convergence within the main scanning surface of the light beam, when expressed in a similar manner as to that for the fourth preferred embodiment, is R-3000.

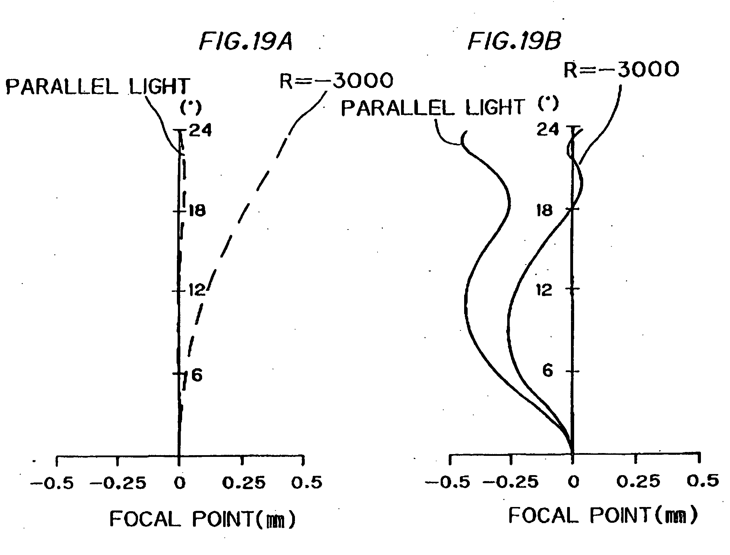

Fig. 19A is a view showing a displacement in the focal position at a field angle position of 0 to 24 degrees in a case where parallel light and convergent light converging within the main scanning surface impinge upon a scanning lens which does not have a regularity deviation, and Fig. 19B is a view showing a displacement in the focal position at a field angle position of 0 to 24 degrees in a case where parallel light and convergent light (R-3000) converging within the main scanning surface impinge upon a scanning lens which has a center sink.

When the scanning lens does not have a regularity deviation, as shown in Fig. 19A, unlike in the case where parallel light impinges, an effect is obtained that a curvature of field is tilted toward the over side as convergent light converging within the main scanning surface impinges. Where a center sink is created in the scanning lens, as clearly shown in Fig. 19B, the image surface is tilted 0.50 mm toward the over side in a similar manner as convergent light of R-3000 impinges, and therefore, focal positions at the field angles across 0 to 24 degrees are close to a focal position at the center of the field angle, such an approximately flat image surface is obtained.

Having such a structure described above, the apparatus for light beam scanning according to the seventh preferred embodiment attains an effect which is similar to that obtained according to the fifth preferred embodiment.

### 8. Eighth Preferred Embodiment

### <8-1. Structure And Characteristics Of Eighth Preferred Embodiment>

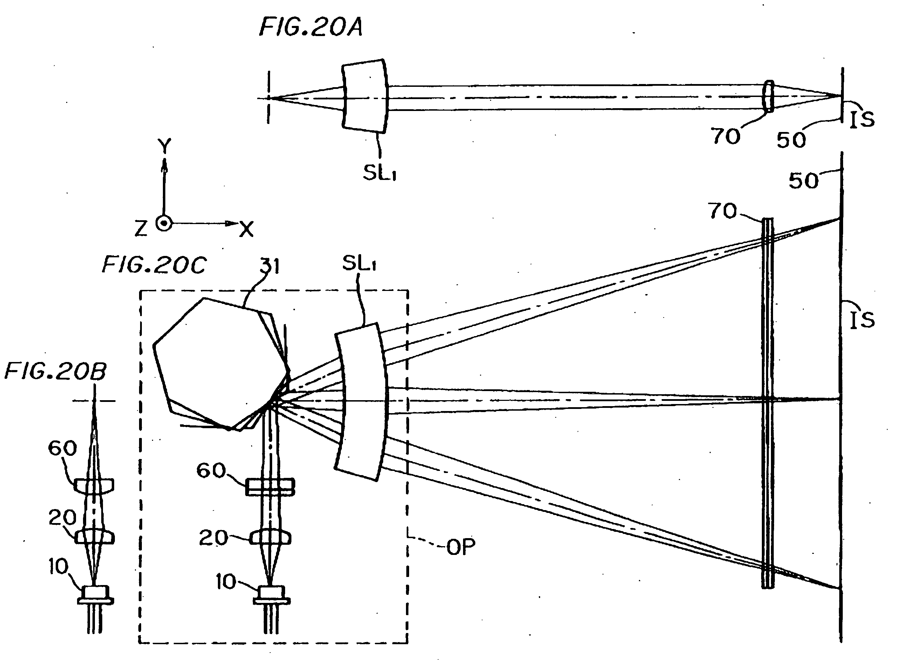

Figs. 20A to 20C are views showing a structure of an apparatus for light beam scanning according to an eighth preferred embodiment. Figs. 20A and 20B are side views of the light beam LB, while Fig. 20C is a plan view of the apparatus for light beam scanning. A structure and characteristics of the apparatus for light beam scanning according to the eighth preferred embodiment of the present invention will be described, with reference to Figs. 20A to 20C.

As shown in Figs. 20A to 20C, the apparatus for light beam scanning according to the eighth preferred embodiment comprises the semiconductor laser 10, the collimate lens 20, the cylindrical lens 60 (corresponding to an imaging optical system), the polygon mirror 31, the scanning lens group SL₁, the cylindrical lens 70 (corresponding to facet error correcting means), the surface-to-be-scanned 50 and the like.

In the first imaging optical system which comprises the collimate lens 20 and the cylindrical lens 60, the light beam LB having a degree of convergence which is adjusted by the collimate lens 20 is focused by the cylindrical lens 60 only in the subscanning direction (Z-axis direction), and the light beam LB converges only within the main scanning surface (X-Y plane) in the vicinity of a mirror surface of the polygon mirror 31 while impinging in a conjugation with the semiconductor laser 10 within a subscanning surface (X-Z plane).

The polygon mirror 31, while rotating, reflects the light beam LB at the respective mirror surfaces of the polygon mirror 31, thereby oscillating the light beam LB in the main scanning direction (Y-axis direction).

By the way, a polygon mirror, when processed at a low processing accuracy, may have "a facet error." That is, the polygon mirror is in a condition that each mirror surface is a little tilted with respect to the vertical direction (Z-axis direction). If the light beam LB impinges upon and is reflected at the mirror surfaces having a facet error, a displacement of a scanning line is produced on the surface-to-be-scanned 50 in the subscanning direction any more in some cases. Different from this, in the apparatus for light beam scanning according to the eighth preferred embodiment, the cylindrical lens 70 is disposed between the scanning lenses and the surface-to-be-scanned 50 in such a manner that the cylindrical lens 70 has a power only in the subscanning direction (Z-axis direction). This ensures that the mirror surfaces of the polygon mirror 31 which have a facet error and the surface-to-be-scanned 50 are in a conjugation with each other so that a displacement of a scanning line by each surface is corrected.

In the eighth preferred embodiment, unlike in the fifth to the seventh preferred embodiments, the cylindrical lens 60 is used which prevents a facet error which is caused by use of the polygon mirror 31. However, when any one of the scanning lens group which is used in the fifth to the seventh preferred embodiments is used as the scanning lens group SL, for the eighth preferred embodiment, the same effect as that obtained in each one of the fifth to the seventh preferred embodiments is obtained.

In other words, this is because the light beam LB which converges to the same extent as in the fifth to the seventh preferred embodiments impinges upon the scanning lens group SL₁ since the cylindrical lens which is used in the eighth preferred embodiment has a power only in the subscanning direction but does not have a power in the main scanning direction, while the degree of convergence of the light beam LB which is important to attain the effect above is related to the main scanning direction.

Since the cylindrical lens does not have a power (refractive power) in the main scanning direction, considering only the main scanning surface, after all, it is possible to correct a curvature of field as in the fifth to the seventh preferred embodiments. Further, since the apparatus according to the eighth preferred embodiment has a structure in which a varied pitch of a scanning line due to a facet error of the mirror surfaces of the polygon mirror 31 as the cylindrical lens 70 maintains an optical conjugation between the mirror surfaces and the surface-to-be-scanned in the subscanning surface, an influence of the facet error of the mirror surfaces of the polygon mirror 31 is suppressed, and consequently, a further more excellent drawing quality is obtained.

### 9. Modification

Although the first to the fourth preferred embodiments require to allow the diverging light beam LB which diverges within the main scanning surface upon the scanning lenses for the purpose of correcting a center rise, "an edge drop" can be corrected in a similar structure.

While the scanning lens group 40 is formed by three groups of three lenses, three groups of four lenses or four groups of four lenses in the respective preferred embodiments described above, other number of lenses, e.g., five lenses, may form the scanning lens group 40.

Further, although the galvanometer mirror 30 is used as a deflector in the first to the third and the fifth to the seventh preferred embodiments and the polygon mirror 31 is used as a deflector in the fourth and eighth preferred embodiment, a deflector is not limited to these. Rather, as a deflector, resonant scanner (resonance type galvanometer mirror), a pentagonal prism, a monogon mirror or the like may be used.

In addition, although the semiconductor laser 10 is used as a light source in the respective preferred embodiments described above, a light source is not limited to this. Instead, a light source which cannot be directly modulated, such as an He-Ne laser and an argon laser, may be used and a modulator may be disposed to modulate the light beam LB from such a light source. Alternatively, an LED (Light Emitting Diode) may be used as a light source.

Moreover, while the collimate lens 20 is used as a lens which adjusts the degree of divergence of the light beam LB in the respective preferred embodiments described above, other meniscus lenses or the like may be used.

## Claims

1. An apparatus for scanning a light beam, comprising:
a) a light source (10) for generating a luminous flux;
b) non-parallel light shaping means (20) for shaping said luminous flux into a non-parallel light beam (LB) which is not parallel in a main scanning plane (X-Y);
c) a deflector (30,31) for deflecting said non-parallel light beam (LB) in said main scanning plane (X-Y) to obtain a deflected light beam; and
d) a scanning lens (40, SL₁) for focusing said deflected light beam on a medium surface (IS) to be scanned,
**characterized in that**
said scanning lens (40, SL₁) has a surface shape error (r₁, r₂, r₃, r₄, r₅, r₆) causing a curvature of field (W, δ) and said non-parallel light shaping means (20) produces said non-parallel light beam (LB) so as to compensate for said surface shape error (r₁, r₂, r₃, r₄, r₅, r₆).

2. The apparatus of claim 1, wherein said non-parallel light shaping means (20) shapes said luminous flux into divergent light which diverges in said main scanning plane (X-Y).

3. The apparatus of claim 1 wherein said non-parallel light shaping means (20) shapes said luminous flux into convergent light which converges in said main scanning plane (X-Y).

4. The apparatus of claim 2 or 3, wherein said non-parallel light shaping means (20) comprises a lens.

5. The apparatus of claim 2, 3 or 4, wherein said deflector comprises a galvanometer mirror (30).

6. The apparatus of claim 2, 3 or 4, wherein said deflector comprises a polygon mirror (31) which comprises a plurality of reflection surfaces.

7. The apparatus of claim 6, further comprising:
e) an image optical system (60) for converging in a co-operative function with said non-parallel light shaping means (20), said luminous flux only in a sub-scanning direction, thereby forming a linear image in a vicinity of said reflection surfaces of said polygon mirror (31); and
f) facet error correcting means (70) for compensating in a co-operative function with said scanning lens (SL₁), a facet error of said reflection surfaces of said polygon mirror (31), said facet error resulting from at least one of said reflection surfaces being tilted with respect to a direction (Z) vertical to the main scanning plane (X-Y),
thereby ensuring that said reflection surface of said polygon mirror (31) and said medium surface (IS) to be scanned are in an approximate optical conjunction with each other.

8. The apparatus of claim 7, wherein said scanning lens (SL₁) has an fθ-characteristic in said main scanning plane (X-Y).

9. A method of scanning a light beam, comprising the steps of:
a) generating (10) a luminous flux;
b) shaping (20) said luminous flux into a non-parallel light beam (LB) which is not parallel in a main-scanning plane (X-Y);
c) deflecting (30, 31) said non-parallel light beam (LB) in said main scanning plane (X-Y) to obtain a deflected light beam; and
d) focusing (40) said deflected light beam on a medium surface (IS) to be scanned with a scanning lens (40, SL₁),
**characterized in that**
said scanning lens (40, SL₁) has a surface shape error (r₁, r₂, r₃, r₄, r₅, r₆) causing a curvature of field (W, δ) and the step b) comprises the step of producing said non-parallel light beam (LB) so as to compensate for said surface shape error (r₁, r₂, r₃, r₄, r₅, r₆).

10. The method of Claim 9, wherein the step b) comprises the step of: b-1) shaping (20) said luminous flux into a divergent light which diverges in said main scanning plane (X-Y).

11. The method of Claim 9, wherein the step b) comprises the step of: b-1) shaping (20) said luminous flux into a convergent light which converges in said main scanning plane (X-Y).

12. The method of Claim 10 or 11, wherein the step c) comprises the step of: c-1) deflecting said non-parallel light beam (LB) with a polygon mirror (31) having a plurality of reflection surfaces.

13. The method of claim 12, further comprises the steps of d) converging (60) said luminous flux only in a sub-scanning direction, thereby forming a linear image in a vicinity of said reflection surfaces; and e) compensating (70) a facet error of said reflection surfaces of said polygon mirror (31), said facet error resulting from at least one of said reflection surfaces being tilted with respect to a direction (Z) vertical to the main scanning plane (X-Y), thereby ensuring that said reflection surfaces of said polygon mirror (31) and said medium surface (IS) to be scanned are in an approximate optical conjunction with each other.

## Patentansprüche

1. Vorrichtung zum Lichtstrahlabtasten, mit:
a) einer Lichtquelle (10) zum Erzeugen eines Lichtflusses;
b) einer Formungseinrichtung (20) für nicht paralleles Licht, um den Lichtfluß in einen nicht parallelen Lichtstrahl (LB) umzuformen, der in einer Hauptabtastebene (X-Y) nicht parallel ist;
c) einem Deflektor (30, 31) zum Ablenken des nicht parallelen Lichtstrahls (LB) in der Hauptabtastebene (X-Y), um einen abgelenkten Lichtstrahl zu erhalten; und
d) einer Abtastlinse (40 SL₁) zum Fokussieren des abgelenkten Lichtstrahles auf eine Mediumfläche (IS), die abgetastet werden soll,
**dadurch gekennzeichnet, daß**
die Abtastlinse (40, SL₁) einen Oberflächenformfehler (r₁, r₂, r₃, r₄, r₅, r₆) hat, der eine Feldkrümmung (W, δ) hervorruft, und die Formeinrichtung (20) für nicht paralleles Licht den nicht parallelen Lichtstrahl (LB) so erzeugt, um den Flächenformfehler (r₁, r₂, r₃, r₄, r₅, r₆) zu kompensieren.

2. Vorrichtung nach Anspruch 1, bei dem die Formeinrichtung (20) für nicht paralleles Licht den Lichtfluß in divergierendes Licht umformt, welches in der Hauptabtastebene (X-Y) divergiert.

3. Vorrichtung nach Anspruch 1, bei der die Formeinrichtung (20) für nicht paralleles Licht den Lichtfluß in konvergierendes Licht umformt, welches in der Hauptabtastebene (X-Y) konvergiert.

4. Vorrichtung nach Anspruch 2 oder 3, bei der die Formeinrichtung (20) für nicht paralleles Licht eine Linse aufweist.

5. Vorrichtung nach Anspruch 2, 3 oder 4, bei der der Deflektor einen galvanometrischen Spiegel (30) aufweist.

6. Vorrichtung nach Anspruch 2, 3 oder 4, bei der der Deflektor einen Polygonspiegel (31) aufweist, welcher eine Vielzahl von Reflexionsflächen aufweist.

7. Vorrichtung nach Anspruch 6, die weiter aufweist:
e) ein optisches Abbildungssystem (20) zum Zusammenführen des Lichtflusses, in einer zusammenwirkenden Funktion mit der Formeinrichtung (20) für nicht paralleles Licht, nur in einer nachrangigen Abtastrichtung, so daß ein lineares Bild in einer Umgebung der Reflexionsflächen des polygonalen Spiegels (31) gebildet wird; und
f) eine Korrektureinrichtung (70) für den Facettenfehler zum Kompensieren, in einer zusammenwirkenden Funktion mit der Abtastlinse (SL₁), eines Facettenfehlers der Reflexionsflächen des Polygonspiegels (31), wobei der Facettenfehler von wenigstens einer der Reflexionsflächen herrührt, die in bezug auf eine Richtung (Z) vertikal zu der Hauptabtastebene (X-Y) verkippt ist,
so daß sichergestellt wird, daß die Reflexionsfläche des Polygonspiegels (31) und der Mediumfläche (IS), die abgetastet werden soll, in einer ungefähren optischen Konjuktion miteinander sind.

8. Vorrichtung nach Anspruch 7, bei der die Abtastlinse (SL₁) eine fθ-Charakteristik in der Hauptabtastebene (X-Y) hat.

9. Verfahren zum Lichtstrahlabtasten, das die Schritte aufweist:
a) Erzeugen (10) eines Lichtflusses;
b) Umformen (20) des Lichtflusses in einen nicht parallelen Lichtstrahl (LB), der in einer Hauptabtastebene (X-Y) nicht parallel ist;
c) Ablenken (30, 31) des nicht parallelen Lichtstrahls (LB) in der Hauptabtastebene (X-Y), um einen abgelenkten Lichtstrahl zu erhalten; und
d) Fokussieren (40) des abgelenkten Lichtstrahls auf eine Mediumfläche (IS), die mit einer Abtastlinse (40, SL₁) abgetastet werden soll,
**dadurch gekennzeichnet, daß**
die Abtastlinse (40, SL₁) einen Oberflächenformfehler (r₁, r₂, r₃, r₄, r₅, r₆) hat, der eine Feldkrümmung (W, δ) hervorruft, und der Schritt b) den Schritt des Erzeugens des nicht parallelen Lichtstrahles (LB) derart, daß der Oberflächenfehler (r₁, r₂, r₃, r₄, r₅, r₆) kompensiert wird, aufweist.

10. Verfahren nach Anspruch 9, bei dem der Schritt b) den Schritt b-1) des Umformens (20) des Lichtflusses in ein divergierendes Licht umfaßt, welches in der Hauptabtastebene (X-Y) divergiert, aufweist.

11. Verfahren nach Anspruch 9, bei dem der Schritt b) den Schritt b-1) des Umformens (20) des Lichtflusses in ein konvergierendes Licht umfaßt, welches in der Hauptabtastebene (X-Y) konvergiert, aufweist.

12. Verfahren nach Anspruch 10 oder 11, bei dem der Schritt c) den Schritt c-1) des Ablenkens des nicht parallelen Lichtstrahls (LB) mit einem Polygonspiegel (31), der eine Vielzahl von Reflexionsflächen hat, aufweist.

13. Verfahren nach Anspruch 12, das weiter die Schritte des d) Konvergierens (60) des Lichtflusses nur in einer nachrangigen Abtastrichtung aufweist, so daß ein lineares Bild in einer Umgebung der Reflexionsflächen gebildet wird; und e) des Kompensierens (70) eines Facettenfehlers der Reflexionsflächen des polygonalen Spiegels (31), wobei der Facettenfehler von wenigstens einer der Reflexionsflächen herrührt, die in bezug auf eine Richtung (Z) vertikal zu der Hauptabtastebene (X-Y) verkippt sind, so daß sichergestellt ist, daß die Reflexionsflächen des Polygonspiegels (31) und der Mediumfläche (IS), die abgetastet werden soll, in einer ungefähren optischen Konjuktion miteinander sind, aufweist.

## Revendications

1. Appareil pour balayer un faisceau lumineux, comportant :
a) une source lumineuse (10) pour générer un flux lumineux,
b) des moyens de mise en forme de lumière non-parallèle (20) pour mettre en forme ledit flux lumineux en un faisceau lumineux non-parallèle (LB) qui n'est pas parallèle dans un plan de balayage principal (X-Y),
c) un déflecteur (30, 31) pour dévier ledit faisceau lumineux non-parallèle (LB) dans ledit plan de balayage principal (X-Y) pour obtenir un faisceau lumineux dévié, et
d) une lentille de balayage (40, SL₁) pour focaliser ledit faisceau lumineux dévié sur une surface de support (IS) à balayer,
**caractérisé en ce que**
ladite lentille de balayage (40, SL₁) a une erreur de forme de surface (r₁, r₂, r₃, r₄, r₅, r₆) provoquant une courbure du champ (W, δ) et lesdits moyens de mise en forme de lumière non-parallèle (20) produisent ledit faisceau lumineux non-parallèle (LB) de manière à compenser ladite erreur de forme de surface (r₁, r₂, r₃, r₄, r₅, r₆).

2. Appareil selon la revendication 1, dans lequel lesdits moyens de mise en forme de lumière non-parallèle (20) mettent en forme ledit flux lumineux en une lumière divergente qui diverge dans ledit plan de balayage principal (X-Y).

3. Appareil selon la revendication 1, dans lequel lesdits moyens de mise en forme de lumière non-parallèle (20) mettent en forme ledit flux lumineux en une lumière convergente qui converge dans ledit plan de balayage principal (X-Y).

4. Appareil selon la revendication 2 ou 3, dans lequel lesdits moyens de mise en forme de lumière non-parallèle (20) comportent une lentille.

5. Appareil selon la revendication 2, 3 ou 4, dans lequel ledit déflecteur comporte un miroir galvanomètre (30).

6. Appareil selon la revendication 2, 3 ou 4, dans lequel ledit déflecteur comporte un miroir polygonal (31) qui comporte une pluralité de surfaces de réflexion.

7. Appareil selon la revendication 6, comportant de plus :
e) un système optique d'imagerie (60) pour faire converger, en coopération avec lesdits moyens de mise en forme de lumière non-parallèle (20), ledit flux lumineux uniquement dans une direction de sous-balayage, de manière à former une image linéaire à proximité desdites surfaces de réflexion dudit miroir polygonal (31), et
f) des moyens de correction d'erreur de facette (70) pour compenser, en coopération avec ladite lentille de balayage (SL₁), une erreur de facette desdites surfaces de réflexion dudit miroir polygonal (31), ladite erreur de facette résultant du fait qu'au moins une desdites surfaces de réflexion est inclinée par rapport à une direction (Z) verticale par rapport au plan de balayage principal (X-Y),
de manière à garantir que ladite surface de réflexion dudit miroir polygonal (31) et ladite surface de support (IS) à balayer sont en association optique approximative l'une avec l'autre.

8. Appareil selon la revendication 7, dans lequel ladite lentille de balayage (SL₁) a une caractéristique fθ dans ledit plan de balayage principal (X-Y).

9. Procédé de balayage d'un faisceau lumineux, comportant les étapes consistant à :
a) générer (10) un flux lumineux,
b) mettre en forme (20) ledit flux lumineux en un faisceau lumineux non-parallèle (LB) qui n'est pas parallèle dans un plan de balayage principal (X-Y),
c) dévier (30, 31) ledit faisceau lumineux non-parallèle (LB) dans ledit plan de balayage principal (X-Y) pour obtenir un faisceau lumineux dévié, et
d) focaliser (40) ledit faisceau lumineux dévié sur une surface de support (IS) à balayer à l'aide d'une lentille de balayage (40, SL₁),
**caractérisé en ce que**
ladite lentille de balayage (40, SL₁) a une erreur de forme de surface (r₁, r₂, r₃, r₄, r₅, r₆) provoquant une courbure du champ (W, δ) et l'étape b) comporte l'étape consistant à produire ledit faisceau lumineux non-parallèle (LB) de manière à compenser ladite erreur de forme de surface (r₁, r₂, r₃, r₄, r₅, r₆).

10. Procédé selon la revendication 9, dans lequel l'étape b) comporte l'étape consistant à : b-1) mettre en forme (20) ledit flux lumineux en une lumière divergente qui diverge dans ledit plan de balayage principal (X-Y).

11. Procédé selon la revendication 9, dans lequel l'étape b) comporte l'étape consistant à : b-1) mettre en forme (20) ledit flux lumineux en une lumière convergente qui converge dans ledit plan de balayage principal (X-Y).

12. Procédé selon la revendication 10 ou 11, dans lequel l'étape c) comporte l'étape consistant à : c-1) dévier ledit faisceau lumineux non-parallèle (LB) à l'aide d'un miroir polygonal (31) ayant une pluralité de surfaces de réflexion.

13. Procédé selon la revendication 12, comportant de plus les étapes consistant à d) faire converger (60) ledit flux lumineux uniquement dans une direction de sous-balayage, de manière à former une image linéaire à proximité desdites surfaces de réflexion, et e) compenser (70) une erreur de facette desdites surfaces de réflexion dudit miroir polygonal (31), ladite erreur de facette résultant du fait qu'au moins une desdites surfaces de réflexion est inclinée par rapport à une direction (Z) verticale par rapport au plan de balayage principal (X-Y), de manière à garantir que lesdites surfaces de réflexion dudit miroir polygonal (31) et ladite surface de support (IS) à balayer sont en association optique approximative les unes avec les autres.
